# EUROPEAN PATENT SPECIFICATION

(11) **EP 2 235 779 B1**
(45) Date of publication and mention of the grant of the patent: **15.04.2020**
(21) Application number: 08864214.5
(22) Date of filing: 18.12.2008
(51) Int. Cl.: H01M 4/86, H01M 4/88, H01M 8/10, H01M 8/1004, H01M 4/92

(54) **ELECTRODE CATALYST DISPERSION AND INK COMPOSITION**
ELEKTRODENKATALYSATORDISPERSION UND TINTENZUSAMMENSETZUNG
DISPERSION CATALYTIQUE D'ÉLECTRODE ET COMPOSITION D'ENCRE

(30) Priority: 21.12.2007 JP 2007330188
(43) Date of publication of application: 06.10.2010
(73) Proprietor: 3M Innovative Properties Company, St. Paul, MN 55133-3427 (US)
(72) Inventor: NODA, Kazuki, Setagaya-ku Tokyo 158-8583 (JP); OKADA, Hideyuki, Setagaya-ku Tokyo 158-8583 (JP)
(74) Representative: Vossius & Partner Patentanwälte Rechtsanwälte mbB
(86) International application number: PCT/US2008/087398
(87) International publication number: WO 2009/082666

(56) References cited:
- WO-A-2007/011054
- WO-A-2007/032864
- WO-A-2007/133271
- US-A- 5 879 827
- US-A- 5 879 828
- US-A1- 2006 009 003
- US-A1- 2006 144 791
- US-A1- 2007 212 538

## Description

### TECHNICAL FIELD

The present invention relates to
an electrode catalyst dispersion and ink composition comprising catalyst particles, to be used for an electrode catalyst layer in a polymer electrolyte fuel cell, and to a process for their production. Herein also disclosed are an electrode catalyst layer formed using the electrode catalyst dispersion or ink composition, and uses such as polymer electrolyte membranes or gas diffusion layers, membrane electrode assemblies and polymer electrolyte fuel cell stacks, that contain such an electrode catalyst layer.

### BACKGROUND

Carbon-supported platinum catalysts, wherein a catalyst metal such as platinum or a platinum alloy is supported on a carbon-based conductive material with a large area-to-weight ratio such as carbon black, are widely utilized as electrodes for polymer electrolyte fuel cells. Such carbon-based conductive materials are generally considered suitable for providing not only mechanical support for the supported catalyst metal, but also the necessary electrical conductivity in the electrode catalyst layer. However, conductive materials used as supports in such electrode catalysts often undergo corrosion loss during prolonged continuous operation of the fuel cell or upon repeated starting and stopping of the fuel cell. The corrosion loss produced in an electrode catalyst employing a carbon support may include the phenomenon whereby, during repeated starting/stopping of the fuel cell as often occurs with use in automobiles, for example, air flows into part of the anode and raises the potential of the cathode to above the potential created by the carbon combustion. Corrosion loss of the conductive material leads to release and/or agglomeration of the supported platinum or other catalyst metal, thus reducing the effective electrochemical surface area and lowering the catalytic activity.

In one attempt to solve this problem, platinum-based catalysts have been designed that comprise supports made of carbon that has been surface-graphitized by high-temperature treatment. Using such a catalyst improves the corrosion resistance of the support to some degree, but still not to a sufficient level. Also, since increasing the degree of graphitization lowers the area-to-weight ratio of the carbon black, the platinum cannot be highly dispersed on the carbon black and it becomes impossible to achieve adequate power generation. Japanese Unexamined Patent Publication No. 2001-302527 may be relevant to such a technology.

U.S. Pat. No. 5,879,827, discloses nanostructured elements comprising acicular microstructured support whiskers bearing acicular nanoscopic catalyst particles. The catalyst particles may comprise alternating layers of different catalyst materials which may differ in composition, in degree of alloying or in degree of crystallinity.

U.S. Patent No. 6,482,763, discloses fuel cell electrode catalysts comprising alternating platinum-containing layers and layers containing suboxides of a second metal that display an early onset of CO oxidation.

U.S. Pats. Nos. 5,338,430, 5,879,828, 6,040,077 and 6,319,293, also concern nanostructured thin film catalysts.

U.S. Pats. Nos. 4,812,352, 5,039,561, 5,176,786, and 5,336,558, concern microstructures.

U.S. Pat. App. No. 10/674,594, issuing Sept. 2, 2008, as U.S. Pat. No. 7,419,741, discloses fuel cell cathode catalysts comprising nanostructures formed by depositing alternating layers of platinum and a second layer onto a microstructure support, which may form a ternary catalyst.

U.S. Pat. App. No. 11/248,561, discloses fuel cell cathode catalysts comprising microstructured support whiskers bearing nanoscopic catalyst particles comprising platinum and manganese and at least one other metal at specified volume ratios and Mn content, where other metal is typically Ni or Co.

U.S. Pat. App. Nos. 10/945,178 and 10/944,998, discloses fuel cell membrane electrode assemblies and fuel cell polymer electrolyte membranes comprising bound anionic functional groups and Mn or Ru cations or comprising manganese oxides which demonstrate increased durability.

U.S. Provisional Pat. App. No. 61/017027, filed December 27, 2007, discloses fuel cell MEA's that include one or more electrodes that include one or more cerium oxides, and may additionally include polymer electrolyte membranes (PEM's) which include one or more manganese salts.

U.S. Pat. No. 6,238,534, describes a hybrid membrane electrode assembly wherein a catalyst supported on a support with a high aspect ratio is added at high density to the anode layer, while a catalyst supported on a support with a low aspect ratio is added to the cathode layer at a lower density than the anode layer. In such a hybrid membrane electrode assembly, the anode layer is formed from acicular Pt catalyst particles with a nanoscale structure that have been embedded in the polymer electrolyte membrane by laminated transfer, while the cathode layer is formed using an ink, paste or dispersion containing dispersed catalyst particles that have a carbon support.

US-A-5,879,827 describes nanostructured elements for use in the electrode of a membrane electrode assembly for use in fuel cells, sensors, electrochemical cells, and the like, the nanostructured elements comprising acicular microstructured support whiskers bearing acicular nanoscopic catalyst particles which may comprise alternating layers of catalyst materials, which may comprise a surface layer that differs in composition from the bulk composition of the catalyst particles.

US-A-5,879,828 describes a membrane electrode assembly comprising an ion conducting membrane and one or more electrode layers that comprise nanostructured elements, wherein the nanostructured elements are in incomplete contact with the ion conducting membrane.

### SUMMARY OF THE DISCLOSURE

There is currently a high demand for electrode catalysts that exhibit excellent durability through reduction or elimination of corrosion loss, which is a problem with electrode catalysts employing carbon supports.

It is highly desirable to develop an electrode catalyst that can minimize as much as possible the amount of catalyst material used while exhibiting desired output by allowing adjustment of the amount as necessary.

The claimed invention provides an electrode catalyst dispersion comprising:
a) catalyst particles comprising
   i) a non-conductive support in the form of whiskers comprising one or more materials selected from the group consisting of naphthalenes, phenanthrenes, perylenes, anthracene, coronenes, pyrenes, phthalocyanines, porphyrins, carbazoles, purines and pterins, and
   ii) a conductive catalyst material covering the surface of non-conductive support whiskers;
b) a dispersing medium selected from the group consisting of water, organic solvents and combinations thereof; and
c) an ionic conductive polymer;
wherein the catalyst particles and the ionic conductive polymer are dispersed in the
dispersing medium, and
wherein the volume percentage of the catalyst particles, based on the total volume of the catalyst particles and ionic conductive polymer, is in the range of 55 vol% to 90 vol%; wherein the term "whiskers" refers to an acicular form, but does not necessarily mean a linear shape.

Furthermore, the claimed invention provides an ink composition comprising the above-mentioned electrode catalyst dispersion.

Moreover, the claimed invention provides a process for production of the above-mentioned ink composition, which comprises
(i) a step of forming, on a substrate, catalyst particles containing a non-conductive support and a conductive catalyst material covering the surface of the non-conductive support,
(ii) a step of releasing the catalyst particles from the substrate, and
(iii) a step of dispersing the released catalyst particles into a solution containing an ionic conductive polymer.

The disclosure also provides an electrode catalyst layer comprising catalyst particles containing a non-conductive support and a conductive catalyst material covering the surface of non-conductive support, and an ionic conductive polymer,
wherein the catalyst particles are essentially homogeneously dispersed in the catalyst layer and the conductive catalyst material layers of adjacent catalyst particles are in contact with each other.

The disclosure also provides a process for production of an electrode catalyst layer, comprising
a step of applying the aforementioned ink composition to at least one surface of a gas diffusion layer or at least one surface a polymer electrolyte membrane containing an ionic conductive polymer, and
a step of drying the ink composition to form an electrode catalyst layer on that surface of the gas diffusion layer or on that surface of the polymer electrolyte membrane.

The disclosure further provides a process for production of an electrode catalyst layer which further comprises, prior to the step of applying the ink composition in the process for production of an electrode catalyst layer described above, a step of embedding second catalyst particles comprising non-conductive support whiskers and a conductive catalyst material covering the surface of non-conductive support whiskers, in at least one surface of the polymer electrolyte membrane, to form a second electrode catalyst layer between the electrode catalyst layer and the aforementioned at least one surface of the polymer electrolyte membrane.

The disclosure still further provides a process for production of an electrode catalyst layer which comprises a step of embedding second catalyst particles comprising non-conductive support whiskers and a conductive catalyst material covering the surface of non-conductive support whiskers, in at least one surface of a polymer electrolyte membrane containing an ionic conductive polymer, to form a second electrode catalyst layer, a step of applying the aforementioned electrode catalyst dispersion onto the aforementioned at least one surface of the polymer electrolyte membrane, a step of drying the electrode catalyst dispersion to form a first electrode catalyst layer on the second electrode catalyst layer, and a step of consolidating the first electrode catalyst layer and second electrode catalyst layer which have been laminated.

The disclosure still further provides a gas diffusion layer or a polymer electrolyte membrane containing an ionic conductive polymer, having the aforementioned electrode catalyst layer formed on its surface.

The disclosure yet further provides the polymer electrolyte membrane described above, which further comprises a second electrode catalyst layer composed of second catalyst particles comprising non-conductive support whiskers and a conductive catalyst material covering the surface of non-conductive support whiskers, between the electrode catalyst layer and the aforementioned at least one surface of the polymer electrolyte membrane, wherein the second catalyst particles are at least partially embedded in the polymer electrolyte membrane.

The disclosure yet further provides a polymer electrolyte membrane containing an ionic conductive polymer, having on at least one surface a first electrode catalyst layer composed of first catalyst particles that contain non-conductive support whiskers and a conductive catalyst material covering the surface of non-conductive support whiskers, and a second electrode catalyst layer composed of second catalyst particles that contain non-conductive support whiskers and a conductive catalyst material covering the surface of non-conductive support whiskers, wherein the second electrode catalyst layer is situated between the first electrode catalyst layer and the aforementioned at least one surface of the polymer electrolyte membrane, the second catalyst particles are at least partially embedded in the polymer electrolyte membrane, and the first electrode catalyst layer and second electrode catalyst layer are consolidated in a laminated state.

The disclosure still further provides a membrane electrode assembly comprising a gas diffusion layer or a polymer electrolyte membrane having the aforementioned electrode catalyst layer formed on its surface, wherein the electrode catalyst layer is on at least the cathode side.

The disclosure still further provides a polymer electrolyte fuel cell stack formed by laminating a plurality of the aforementioned membrane electrode assemblies.

With the electrode catalyst dispersion of the disclosure, it is possible to adjust the catalyst material density in the electrode catalyst dispersion and/or the amount of the electrode catalyst dispersion used. By adjusting the amount of catalyst per active area in the electrode catalyst layer, it is possible to obtain an electrode catalyst layer with excellent durability while maintaining output suited for the purpose.

With the ink composition of the disclosure, methods applied for ordinary ink compositions during formation of electrode catalyst layers can be used for the ink composition of the disclosure, and therefore the step of forming an electrode catalyst layer with an ionic conductive polymer and catalyst particles comprising a non-conductive support and a conductive catalyst material covering the surface of non-conductive support can be easily incorporated into the fabrication process for conventional fuel cells.

Also with the ink composition and electrode catalyst layer of the disclosure, the catalyst material density in the ink composition and/or the amount of ink composition used can be freely adjusted to modify the amount of catalyst per active area of the electrode catalyst layer, according to the desired purpose. For uses where it is desirable to exhibit high output in low current density regions, the catalyst amount in the active area of the fuel cell can be easily increased using the same catalyst particles, unlike cases in which catalyst particles are embedded in a polymer electrolyte membrane as described in U.S. Patent Application Publication No. 2007-0082256A1, for example, thereby facilitating fabrication of a membrane electrode assembly and polymer electrolyte fuel cell stack with the desired output characteristics.

The coating of the conductive catalyst material on the catalyst particles according to the electrode catalyst layer of the disclosure not only produces the necessary electrochemical catalyst effect, but can also impart electrical conductivity to the formed electrode catalyst layer, thus alleviating or eliminating the problem of corrosion loss associated with electrode catalyst layers employing conductive supports containing carbon. Consequently, membrane electrode assemblies and polymer electrolyte fuel cell stacks of the disclosure fabricated using such an electrode catalyst layer have excellent durability compared to membrane electrode assemblies and fuel cell stacks employing conventional carbon supports, when used for automobiles and similar purposes where the fuel cells are subjected to repeated starting and stopping.

According to the embodiment which further comprises a second electrode catalyst layer composed of second catalyst particles embedded in the surface of the polymer electrolyte membrane, under the electrode catalyst layer formed using an ink composition, it is possible to ensure output necessary for the intended purpose by adjusting the electrode catalyst layer to the desired thickness while utilizing the very high catalyst specific activity of the second electrode catalyst layer, and therefore the amount of catalyst material used can be kept to a minimum while increasing the catalytic activity of the electrode as a whole.

According to the embodiment which comprises a first electrode catalyst layer composed of first catalyst particles and a second electrode catalyst layer composed of second catalyst particles embedded in the polymer electrolyte membrane, with the first electrode catalyst layer and second electrode catalyst layer consolidated in a laminated state, it is possible to increase output by the first electrode catalyst layer while utilizing the very high catalyst specific activity of the second electrode catalyst layer, and therefore the amount of catalyst material used can be kept to a minimum while increasing the catalytic activity of the electrode as a whole to meet demands for high absolute output.

Furthermore, in addition to the embodiment that comprises an ionic conductive polymer in the electrode catalyst layer, according to the embodiment which further comprises a moisture retention layer on the electrode catalyst layer, the retention layer containing an ionic conductive polymer and a conductive filler dispersed in the ionic conductive polymer, the ionic conductive polymer can prevent freezing of moisture that occurs with low temperature applications that may cause freezing of moisture contained in the electrode catalyst layer, such as in cold climate stations or in automobiles and the like, so that it is possible to fabricate fuel cell stacks with excellent cold-start properties compared to those having electrode catalyst layers that have catalyst particles embedded in polymer electrolyte membranes, as described in U.S. Patent Application Publication No. 2007-0082256A1. Moreover, because ionic conductive polymers have a moisture retention effect, they allow stable operation of the fuel cell even under low-moisture conditions.

The preceding description should not be construed as disclosing all of the embodiments of the disclosure nor all of the advantages of the disclosure. The drawings and detailed description which follow relate to representative embodiments of the disclosure for a more detailed understanding of the disclosure.

### BRIEF DESCRIPTION OF THE DRAWINGS

Fig. 1 is a cross-sectional view of a gas diffusion layer (GDL) having an electrode catalyst layer formed on the surface, according to an embodiment of the disclosure.
Fig. 2 is a cross-sectional view of a polymer electrolyte membrane (PEM) having electrode catalyst layers formed on two opposite surfaces, according to another embodiment of the disclosure.
Fig. 3 is a scanning electron microscope photograph showing the cross-section of an electrode catalyst layer fabricated using an ink composition according to an embodiment of the disclosure.
Fig. 4 is a cross-sectional view of a PEM comprising an electrode catalyst layer formed using an ink composition, and a second electrode catalyst layer composed of second catalyst particles embedded in the surface of the PEM, according to another embodiment of the disclosure.
Fig. 5 is a cross-sectional view of a PEM comprising a first electrode catalyst layer composed of first catalyst particles and a second electrode catalyst layer composed of second catalyst particles embedded in the PEM, wherein the electrode catalyst layers are consolidated in a laminated state, according to another embodiment of the disclosure.
Fig. 6 is a cross-sectional view of the PEM of Fig. 5, which further comprises a moisture retention layer on the first electrode catalyst layer.
Fig. 7 shows an exploded cross-sectional view of a membrane electrode assembly (MEA).
Fig. 8a is a graph plotting the I-V characteristics for the fuel cells of Examples 1 to 2 and 4 to 5 and Comparative Example 1.
Fig. 8b-1 is a graph plotting the I-V characteristics for the fuel cells of Examples 2 and 3.

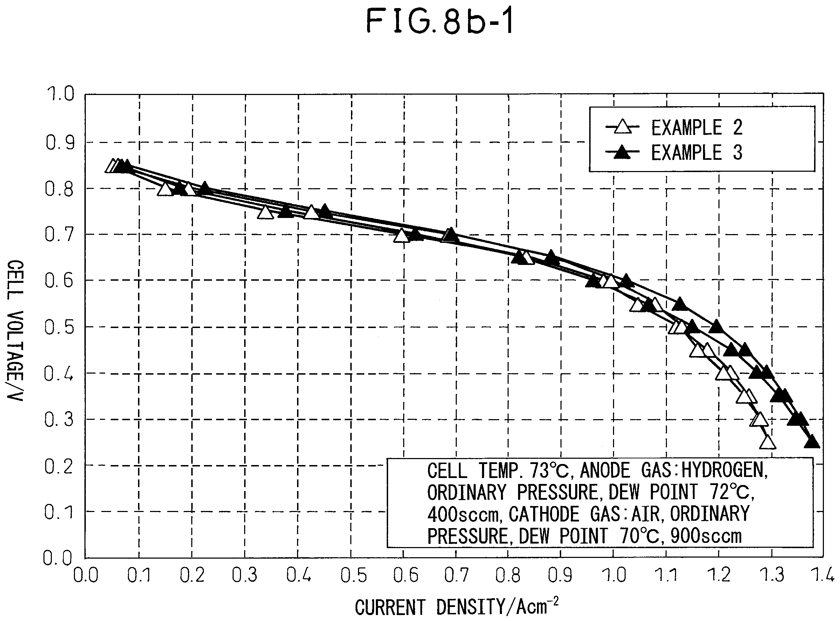

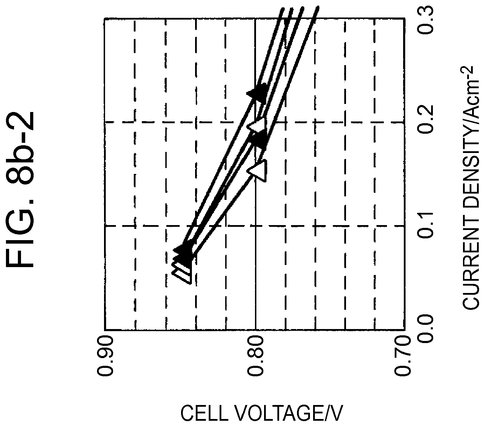

Fig. 8b-2 is a detail of Fig. 8b-1.

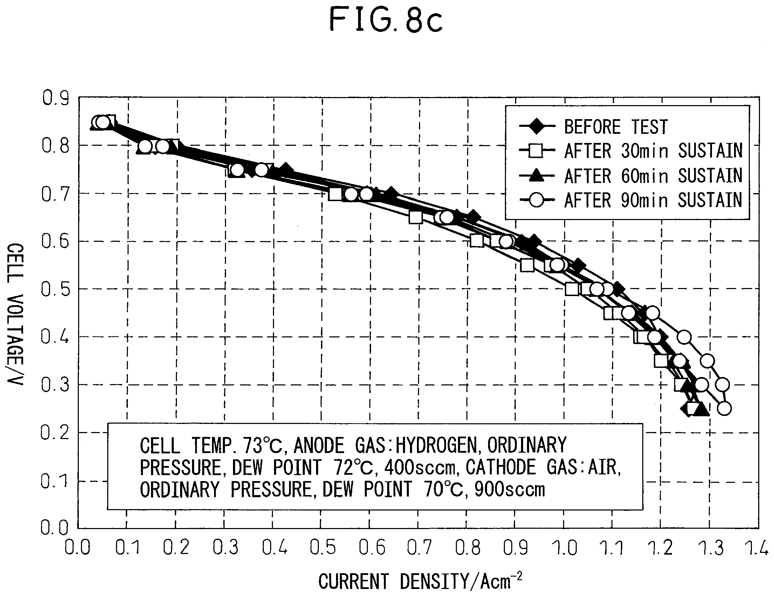

Fig. 8c is a graph plotting the I-V characteristics for the fuel cell of Example 1, in a high voltage sustain test.

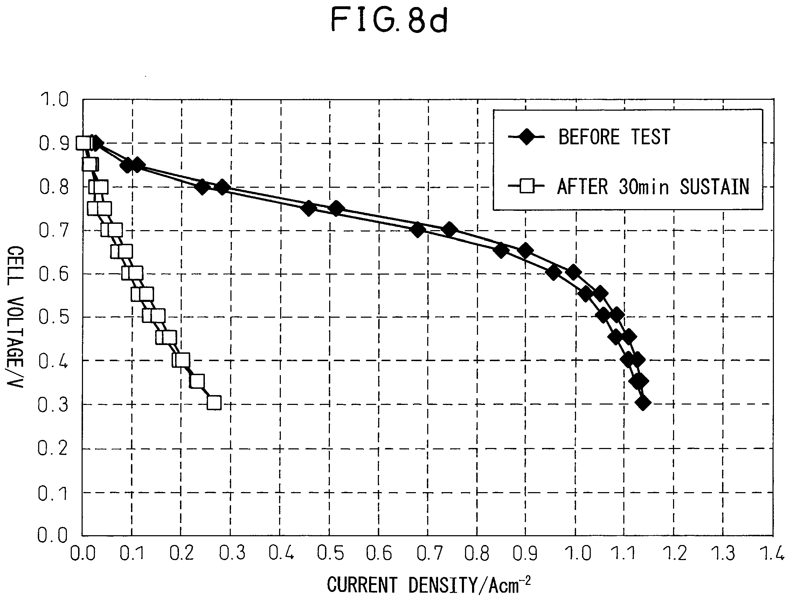

Fig. 8d is a graph plotting the I-V characteristics for the fuel cell of Comparative Example 3, in a high voltage sustain test.

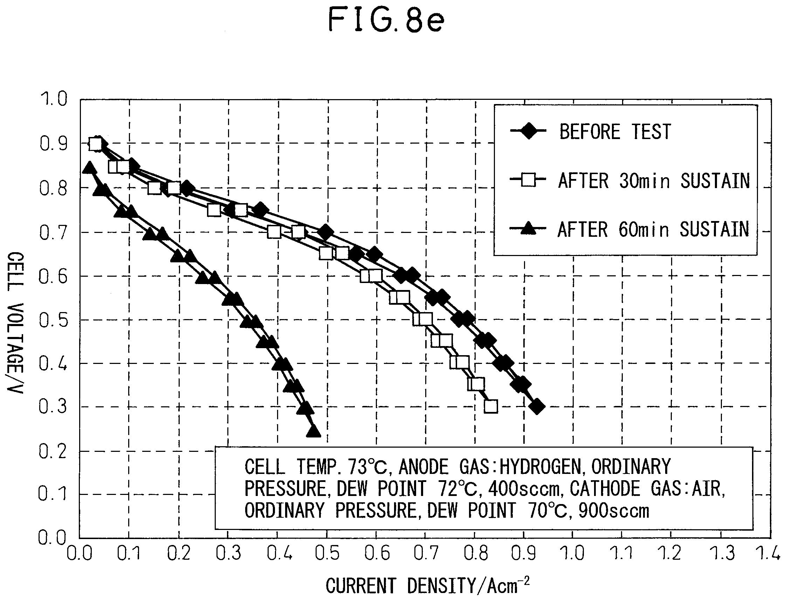

Fig. 8e is a graph plotting the I-V characteristics for the fuel cell of Comparative Example 4, in a high voltage sustain test.

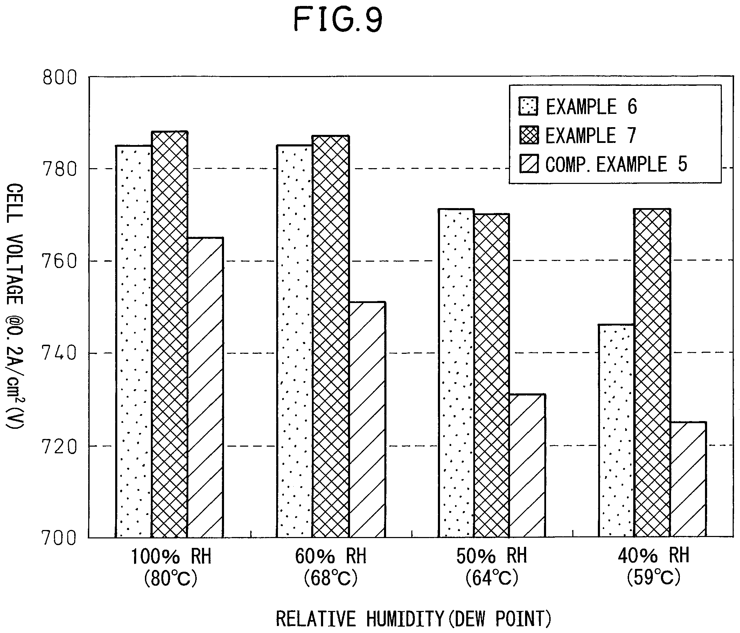

Fig. 9 is a bar graph showing cell voltage during constant current operation with varying relative humidity, for Examples 6 to 7 and Comparative Example 5.

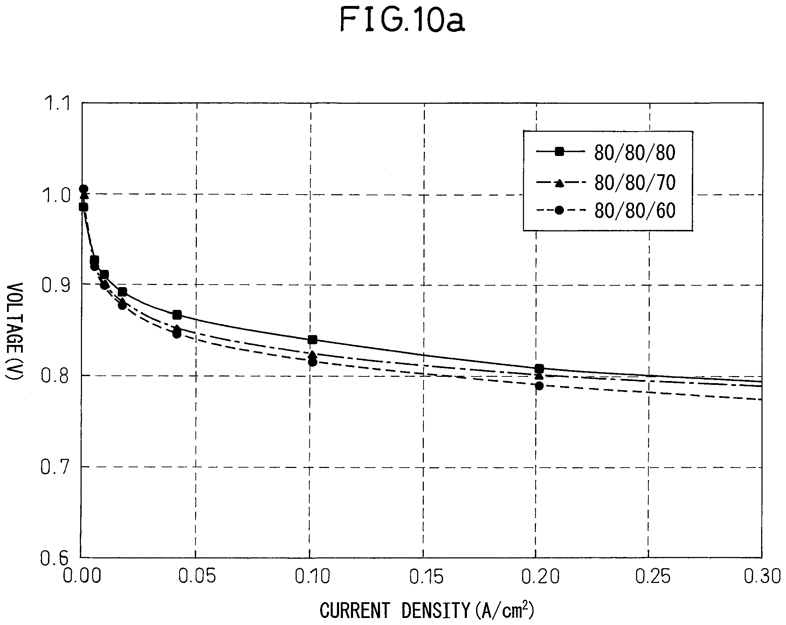

Fig. 10a is a graph showing current density-cell voltage characteristic during current scan operation with varying dew point on the cathode, for Example 8-2.

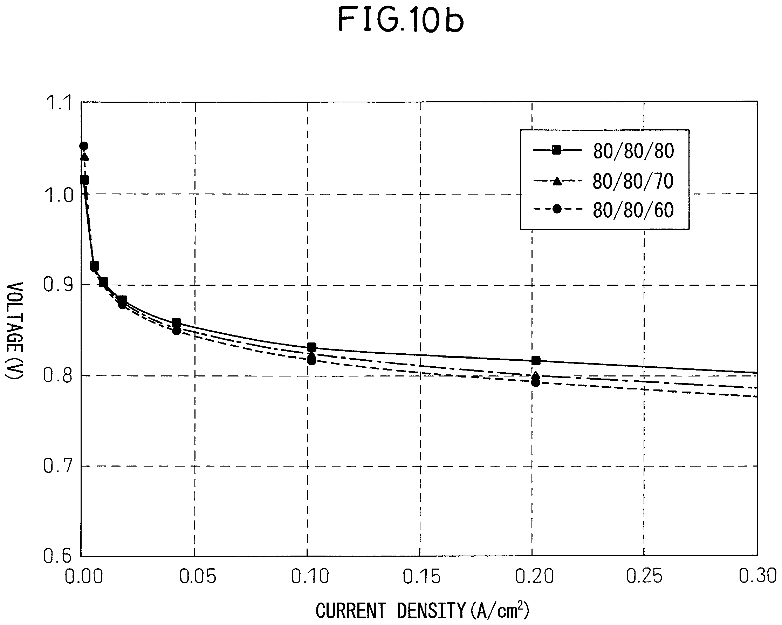

Fig. 10b is a graph showing current density-cell voltage characteristic during current scan operation with varying dew point on the cathode, for Example 9.

### DETAILED DESCRIPTION

The claimed invention provides an electrode catalyst dispersion, an ink composition comprising the electrode catalyst dispersion, and a process for preparing the ink composition, as defined in the claims.

The electrode catalyst dispersion of the disclosure comprises catalyst particles that contain a non-conductive support and a conductive catalyst material covering the surface of non-conductive support, and a dispersing medium selected from among water, organic solvents and combinations thereof.

The ink composition of the disclosure comprises catalyst particles containing a non-conductive support and a conductive catalyst material covering the surface of non-conductive support, a dispersing medium selected from among water, organic solvents and combinations thereof, and an ionic conductive polymer.

### Non-conductive support and process for its fabrication

The non-conductive support used for the disclosure consists of particles comprising any non-conductive material. The material in the non-conductive support may be a non-conductive organic material, inorganic material or mixture or alloy thereof. In the claimed invention, the non-conductive support is as defined in claim 1.

The non-conductive support has features including a suitable size, shape and surface structure for use as catalyst particles when covered on the surface with the catalyst material coating described hereunder. The non-conductive support may have any of a variety of shapes including spherical, elliptical, cuboid, cylindrical or acicular shapes, or it may have a compound shape which is a combination of such shapes. It may also have a surface structure such as texturing, dents or pores on the surface of these shapes. For effective utilization of the catalyst material the surface area per unit volume of the support is preferably large, and whiskers are an example of a preferred form of the support.

The term "whiskers" as used herein refers mainly to an acicular form, but does not necessarily mean a linear shape. For example, the ends of the whiskers may be bent, curled or curved, or the whiskers may be bent, curled or curved along their entire length. The whiskers may also be aggregates with a plurality of acicular projections, or a plurality of whiskers may be in contact to form masses.

The lengths and shapes of each of the individual whiskers of the non-conductive support may be substantially the same or different, but they are preferred to be essentially uniform with minimal deviation from the mean diameter of the whisker cross-sections. The term "mean diameter of the whisker cross-sections" used herein is defined as the average value of the cross-sectional dimensions of the whiskers along their main axes. The mean diameter of the whisker cross-sections is preferably no greater than about 1 µm, and more preferably no greater than about 100 nm. The mean diameter of the whisker cross-sections according to several embodiments is in the range of about 30 nm-100 nm. The whisker length is preferably no greater than about 50 µm, where the whisker length is defined as the length of each whisker along the main axis. The whisker length is more preferably about 0.1-5 µm, and most preferably about 0.1-3 µm.

The mean aspect ratio of the non-conductive support whiskers is preferably at least about 3, more preferably at least about 4 and even more preferably at least about 5. The mean aspect ratio is also preferably no greater than about 100, more preferably no greater than about 50 and even more preferably no greater than about 20. The term "mean aspect ratio" used herein refers to the value of the whisker length divided by the mean diameter of the whisker cross-sections, and it is the average value for multiple non-conductive supports.

For satisfactory use in subsequent steps of applying the catalyst material, the non-conductive support is preferably formed in a laminar fashion on the substrate. For example, the non-conductive support whiskers may have a uniform layer of the non-conductive support material which has been formed on the substrate and heat treated to fix it on the substrate. The processes for fabrication of the non-conductive support whiskers described in USP 4,812,352 and USP 5,039,561, which are examples of such a process, comprise (i) a step of depositing or condensing vapor of the organic material on the substrate to form a uniform thin-layer of the organic material, and (ii) a step of annealing the deposited organic layer under reduced pressure for a time and at a temperature sufficient to produce a physical change in the deposited organic layer and form a layer of non-conductive support whiskers with a dense array of discrete non-conductive support whiskers, but insufficient for vaporization or sublimation of the organic layer. This can fabricate discrete non-conductive support whiskers that are distributed and supported in a laminar fashion on the substrate. The term "discrete" used herein refers to individual elements having a separate identity, although the elements may be in contact with each other.

Examples of organic materials useful for fabricating non-conductive support whiskers using such a process include planar molecules having chains or rings with wide delocalization of the π-electron density. Such organic materials generally crystallize in a herringbone configuration. They can be largely classified as either polynuclear aromatic hydrocarbons or heterocyclic aromatic compounds. In the claimed invention, the non-conductive support material is as defined in claim 1.

Polynuclear aromatic hydrocarbons are described in Morrison and Boyd, Organic Chemistry, Third Edition, Allyn and Bacon, Inc. (Boston: 1974), Chapter 31. Heterocyclic aromatic compounds are also described in Morrison and Boyd, Chapter 31.

Examples of preferred polynuclear aromatic hydrocarbons that are commercially available include naphthalenes, phenanthrenes, perylenes, anthracene, coronenes and pyrenes. A preferred polynuclear aromatic hydrocarbon is N,N'-di(3,5-xylyl)perylene-3,4,9,10-bis(dicarboximide) (commercially available under the trade name "C. I. PIGMENT RED 149" by American Hoechst Corp., Somerset, NJ) (hereinafter referred to as "perylene red" throughout the present specification).

Examples of preferred heterocyclic aromatic compounds that are commercially available include phthalocyanines, porphyrins, carbazoles, purines and pterins. Representative examples of heterocyclic aromatic compounds include metal-free phthalocyanines (for example, dihydrogenphthalocyanine) and their metal chelates (copper phthalocyanine) .

Materials that are useful as substrates for support of non-conductive support whiskers include materials that maintain their integrity under the temperature and vacuum applied during the vapor deposition step and annealing step. The substrate may be flexible or rigid, flat or non-flat, concave, convex or textured, or a combination of the above.

Preferred substrates include organic materials and inorganic materials (for example, glass, ceramics, metals and semiconductors). Preferred inorganic substrates are glass and metals. Polyimide is a preferred organic substrate. The substrate is more preferably metallized with a conductive material layer having a thickness of 10-70 nm in order to remove electrostatic charge. Such a layer may even be non-continuous.

Examples of representative organic substrates include polyimide membranes (commercially available, for example, under the trade name "KAPTON" by DuPont Electronics, Wilmington, DE) and high-temperature-stable polyimides, polyesters, polyamides and polyaramids, which are stable at the annealing temperature.

Examples of metals that are useful as substrates include chromium, aluminum, cobalt, copper, molybdenum, nickel, platinum, tantalum and combinations thereof. Examples of ceramics that are useful as substrates include metals such as alumina and silica, or non-metal oxides. Silicon is a useful inorganic non-metal.

The organic material of the non-conductive support whiskers can be deposited on the substrate using a physical vapor phase deposition, chemical vapor phase deposition or sublimation method, such as vapor deposition or sputtering. In this case, the orientation of the non-conductive support whiskers will be affected by the substrate temperature, deposition rate and incident angle during the organic layer deposition. If the temperature of the substrate is sufficiently high during the organic material deposition, the deposited organic material will form non-conductive support whiskers in an irregular orientation either as deposited or in the subsequent annealing. If the temperature of the substrate is relatively low during the deposition, the deposited organic material will tend to form non-conductive support whiskers in a uniform orientation in the subsequent annealing. For example, when perylene red-containing non-conductive support whiskers with a uniform orientation are desired, the temperature of the substrate is preferably about 0 to 30°C during deposition of the perylene red. The thickness of the organic layer deposited in this manner will typically be about 1 nm-1 µm, and is preferably about 0.03-0.5 µm.

In the annealing step, the substrate coated with the organic layer is heated under reduced pressure for a sufficient time and at a sufficient temperature to cause a physical change in the coated organic layer. This will result in growth of the organic layer and formation of a layer of non-conductive support whiskers containing a dense array of discrete, oriented monocrystalline or polycrystalline non-conductive support whiskers. The orientation of the non-conductive support whiskers will normally be uniform with respect to the surface of the substrate. The non-conductive support whiskers will also normally be oriented in the direction normal to the original surface of the substrate. The direction normal to the surface, in this case, is defined as the direction of a line perpendicular to an imaginary surface that is tangent to the local substrate surface at the point where the base of the non-conductive support whiskers contacts the substrate surface. Directions normal to the surface appear to run along the contour of the substrate surface. The main axes of the non-conductive support whiskers may be parallel or non-parallel to each other. If the temperature of the substrate is sufficiently low during the annealing step, the non-conductive support whiskers will tend to be uniformly oriented. Incidentally, since subsequent formation of the non-conductive support whiskers is not affected by exposure of the coated substrate to air prior to the annealing step, it is not necessary to carry out the deposition step and annealing step continuously under reduced pressure.

In order to completely convert the deposited organic layer to non-conductive support whiskers, optimum and maximum annealing temperatures may be used for various film thicknesses. For complete conversion, the maximum dimension for each of the non-conductive support whiskers is directly proportional to the thickness of the initially deposited organic layer. The non-conductive support whiskers are discrete and separated by distances on the order of their diameters, and preferably they have uniform diameters. When all of the original organic material is converted to non-conductive support whiskers and the weight of the organic material is conserved, the lengths of the non-conductive support whiskers are proportional to the thickness of the originally deposited layer. Since the original organic layer thickness is related in this way to the lengths of the non-conductive support whiskers while the diameters are unrelated to the lengths, the lengths and aspect ratios of the non-conductive support whiskers can be converted irrespective of the diameters and areal number densities of the non-conductive support whiskers. For example, it is known that when the thickness of the organic layer is about 0.05-0.2 µm, the lengths of the non-conductive support whiskers will be about 10-15 times the thickness of the vapor deposited perylene red layer. The surface area of the layer of the non-conductive support whiskers (that is, the total surface area of all of the non-conductive support whiskers) is much larger than the surface area of the organic layer originally deposited on the substrate.

The areal number density of the non-conductive support whiskers is preferably about 10⁷-10¹¹ whiskers/cm². The areal number density of the non-conductive support whiskers is more preferably about 10⁸-10¹⁰ whiskers/cm².

Each of the discrete non-conductive support whiskers may be amorphous but is preferably monocrystalline or polycrystalline. The layer of the non-conductive support whiskers has a high degree of anisotropy due to the crystalline nature and uniform orientation of the non-conductive support whiskers.

As a specific example, when the coating organic material is perylene red or copper phthalocyanine, the annealing is preferably carried out at a temperature of about 160-270°C under reduced pressure (below about 1 × 10⁻³ Torr). The annealing time required to convert the original organic layer to a layer of the non-conductive support whiskers will depend on the annealing temperature. Generally, an annealing time of about 10 minutes to 6 hours will be sufficient, with about 20 minutes to 4 hours being preferred. For perylene red, the optimum annealing temperature for conversion of the entire original organic layer to a layer of non-conductive support whiskers without loss due to sublimation will presumably differ depending on the thickness of the deposited layer. Normally, the temperature will be 245-270°C for an original organic layer thickness of 0.05-0.15 µm.

### Catalyst material

The conductive catalyst material used for the disclosure is a material that serves as a functional layer with electrical conductivity, mechanical properties (strengthening and/or protection of the non-conductive support) and the desired catalyst properties when one or more layers are applied to the non-conductive support to form a coating.

The conductive catalyst material is a conductive material that exhibits a catalyst function, and it is preferably a metal or metal alloy. Examples of metals or metal alloys include transition metals such as Au, Ag, Pt, Os, Ir, Pd, Ru, Rh, Sc, V, Cr, Mn, Fe, Co, Ni, Cu and Zr; low melting point metals such as Bi, Pd, In, Sb, Sn, Zn and Al; high melting point metals such as W, Re, Ta and Mo, as well as their alloys and mixtures, and generally Pt and alloys of Pt with Ru and/or Co are used in polymer electrolyte fuel cells.

The conductive catalyst material described above can be used to coat the surface of the non-conductive support with a coating of the conductive catalyst material by deposition onto the non-conductive support using prior art technology as described in USP 4,812,352 and USP 5,039,561, for example. The method for depositing the conductive catalyst material may be any method known in the technical field, and for example, there may be mentioned dry deposition processes including physical vapor phase deposition processes such as vapor deposition, sputtering and sublimation, or chemical vapor phase deposition processes; and wet deposition processes including solution coating or dispersion coating (for example, dip coating, spray coating, spin coating or flow coating (wherein a liquid is poured onto a surface with the non-conductive support disposed in a laminar fashion on a substrate, the liquid is allowed to flow over the layer and the solvent is then removed), immersion coating (wherein the non-conductive support is immersed in a solution for a sufficient time for the non-conductive support to adsorb molecules from the solution, or colloid or other particles from a dispersion), electroplating and electroless plating. Physical vapor phase deposition processes and chemical vapor phase deposition processes are preferred among these. The conductive catalyst material is more preferably deposited by a vapor phase deposition process such as ion sputter deposition, cathode arc deposition, vapor condensation, vacuum sublimation, physical vapor transfer, chemical vapor transfer or organometallic chemical vapor deposition.

The vapor phase deposition can be carried out using any suitable means known in the technical field. An apparatuses useful for vapor phase deposition will usually include a vacuum chamber provided with a vacuum pump, source or target, substrate and means for producing deposition seeds.

Chemical vapor phase deposition (CVD) is useful for forming a coating by vacuum deposition of the seeds produced by chemical reaction occurring when the reactive substance flows over the heated substrate and reacts on or near the surface of the substrate. Examples of CVD processes include plasma CVD (plasma-assisted CVD), photoexcited CVD, organometallic CVD and related processes.

Physical vapor phase deposition (PVD) is preferred for formation of a coating of the catalyst material by deposition of the catalyst material on the non-conductive support. PVD processes generally include deposition of atoms or molecules or their combinations by vaporization or sputtering in a vacuum. The PVD process may comprise (1) a step of producing deposition seeds by vaporization or sputtering using resistance, induction, electron beam heating, laser beam ablation, direct current plasma generation, high-frequency plasma generation, molecular beam epitaxy or similar means, (2) a step of transporting the deposition seeds from the source to the substrate by molecular flux, viscous flow, plasma gas transport or the like, and (3) a step of growing a coating on the substrate, which is sometimes assisted by applying an electrical bias to the substrate. Using PVD it is possible to control the crystallization and growth mode of the deposited catalyst material by varying the substrate temperature.

Physical vapor phase deposition by sputtering is carried out in a partial vacuum (13.3-1.33 Pa for diode systems, 0.13-0.013 Pa for magnetron systems), when gas ions are propelled with an electric field and bombarded onto the target (normally the cathode). The sputtering gas will usually be a rare gas such as argon, but the sputtering gas may also contain reactive elements capable of being incorporated into the deposited film, as with deposition of nitrides, oxides and carbides. When ionized, the sputtering gas generates glow discharge or plasma. The gas ions are accelerated toward the target by an electric field or magnetic field. Atoms are released from the target by momentum transfer, crossing the vacuum chamber and becoming deposited on the substrate. In most cases, the target may consist of a single elemental species.

Alloy deposition is accomplished by simultaneous vaporization of multiple target elements, vaporization or sputtering from a single alloy source and flash vaporization of preformed alloy pellets. Alloy PVD by methods known in the technical field have often been inadequate for numerous reasons. Alloy components generally have different vapor pressures and sputtering yields, and will change with time so that the alloy produced on the target may not have the same composition as the target alloy. Processes for simultaneous vaporization and sputtering of multiple sources usually alter the alloy composition along the plane of the substrate, while flash vaporization, pulse laser vaporization and electron beam vaporization are sometimes associated with release of liquid drops that can severely damage the substrate.

Deposition of a mixed metal or alloy by vacuum deposition may be carried out using a simple mixed catalyst material source. However, since the sputtering rate or vaporization rate/sublimation rate will differ depending on the element, it is difficult to achieve stoichiometric control. A different method is to simultaneously deposit different elements from multiple sources onto the same region of the substrate. However, the reachable incident angle is limited in practice by the actual physical size of the equipment, and because each point is at a different distance from the source, it is extremely difficult to achieve uniform deposition over the entire substrate. In addition, the sources may cross-contaminate each other in some cases.

A preferred method for vacuum deposition of a mixed metal or alloy is alternating deposition of multilayers with different elemental compositions. The problems mentioned above can be avoided by using a multilayer/ultrathin layer vacuum deposition process to form an alloy or multielement catalyst material coating. It is sometimes preferable to use the materials under different sputtering gas conditions for each material, such as reactivity sputtering deposition for one element and non-reactive deposition for another element.

The deposition rate is controlled by the power supply settings and the path distance between the target source and the substrate, while the amount of deposition for each pass is controlled by the deposition rate and pass time. Consequently, various combinations of the source target power and drum speed may be used to achieve deposition to the desired amount for each path under the target. The amount of deposition for each path may vary from a low end with a submonolayer at a doping concentration of no greater than 10¹⁵ atoms/cm², to the high end with a layer of a few hundred molecules. Depending on the thin-film growth mechanism unique to the deposited catalyst material and sputtering conditions, the catalyst material may form nuclei as a continuous thin-film or a plurality of discrete islands. The amount of deposition for each path may be varied from 1/10 of one atomic layer to a few hundred monolayers, but 1-100 monolayers is preferred and 5-50 is more preferred.

When the method described above is used to deposit the catalyst material, several nanometers and preferably about 2-10 nm of fine particles of the catalyst material are generally formed, to uniformly cover at least part of the outer surface region of the non-conductive support. When the catalyst material is deposited at roughly perpendicular incidence to the flat substrate having a layer of discrete oriented non-conductive support whiskers, discrete nanoscale structures of even smaller size may grow from the sides of the non-conductive support whiskers. The surface area of such a fractal structure more closely approaches the theoretical maximum value.

In this way, catalyst particles comprising a non-conductive support and a conductive catalyst material coating covering the surface of the non-conductive support can be formed in a manner supported on the substrate. Such catalyst particles have at least a portion of the outer surface region of the non-conductive support covered with the conductive catalyst material coating. The thickness of the conductive catalyst material coating will generally be about 0.2-50 nm, and is preferably about 1-20 nm. The conductive catalyst material coating may also be discontinuous at multiple sections of the same non-conductive support. The conductive catalyst material coating is composed of the aforementioned fine particles of the catalyst material on the scale of a few nanometers, and preferably about 2-10 nm. Also, discrete nanoscale structures made of the catalyst material that are yet smaller than the non-conductive support may be provided to the surface of the non-conductive support, and such discrete nanoscale structures are often formed on the sides of the non-conductive support. The dimensions of the catalyst particles are generally such that the lengths (that is, lengths along the main axes of the catalyst particles) are no greater than about 50 µm, preferably no greater than about 5 µm, more preferably no greater than about 1 µm and even more preferably no greater than about 0.6 µm, and the mean aspect ratios (that is, ratios of the aforementioned lengths to the mean diameters of the cross-sections along the lengthwise directions) are at least 3, preferably at least 5 and more preferably at least 10. The areal number density of the catalyst particles on the substrate is at least 10 and preferably at least 20 per 1 µm².

### Method for release of catalyst particles

The catalyst particles prepared in the manner described above are released from the substrate supporting the catalyst particles to isolate the catalyst particles and obtain freely flowing, separated catalyst particle powder. Release of the catalyst particles from the support substrate may be accomplished using any desired method that substantially does not adversely affect the function or shapes of the catalyst particles, and several such methods are described hereunder as examples.

One method for releasing the catalyst particles includes thermocompression of a polymer membrane on the substrate on which the catalyst particles have been formed to transfer the catalyst particles to the polymer membrane, and then immersing the catalyst particle-transferred polymer membrane in a liquid which swells but does not dissolve the polymer membrane to free the catalyst particles into the liquid.

The polymer membrane may be any desired material that melts or softens at least partially during the thermocompression and captures at least portions (for example, the projecting tips) of the catalyst particles into the membrane, and then when cooled retains sufficient strength to release the catalyst particles from the substrate and swells when immersed in the liquid so that the catalyst particles are released. Examples of such materials include thermoplastic resins such as polyethylene, polypropylene, polystyrene, polyvinyl chloride, acryl, polyvinyl acetate, polytetrafluoroethylene (PTFE) and fluoropolymers, as well as their blends and copolymers. The polymer electrolyte membrane (PEM) to be used in the fuel cell may also be employed as the polymer membrane for this method. The polymer membrane may also be supported on another substrate (backing substrate).

The thermocompression may be carried out using any suitable means that can apply the desired heat and pressure to the sections of the catalyst particles and polymer membrane that are in contact, such as a hot press or laminator. Transfer of the catalyst particles to the polymer membrane, i.e. release from the support substrate, can be accomplished using any appropriate means, such as a manual release apparatus, or an apparatus that fixes one end of the support substrate and pulls it off at a constant speed.

Selection of a liquid that swells but does not dissolve the polymer membrane will depend on the polymerization degree and polarity of the polymer membrane used, as well as the functional groups contained in the polymer and its degree of crosslinking. Such a liquid may be an organic solvent or water, or it may be a mixture of a plurality of organic solvents and/or water in order to adjust the polarity of the liquid. In order to avoid adversely affecting the function and shapes of the catalyst particles, it is preferably a solvent that does not dissolve nor corrode the conductive catalyst material on the surfaces of the catalyst particles, or when the non-conductive support is partially exposed, one that does not dissolve the material composing the non-conductive support. For example, when the polymer membrane is a hydrocarbon polymer such as polyethylene or polypropylene, organic solvents such as toluene, xylene and chloroform may be used as suitable liquids. When using the polymer electrolyte membrane of the fuel cell, mixed solvents of water and alcohols such as water/methanol may be used as suitable liquids.

Immersion of the catalyst particle-transferred polymer membrane into the aforementioned liquid causes the polymer membrane to swell, resulting in freeing of the held catalyst particles into the liquid. To accelerate freeing of the catalyst particles into the liquid, the polymer membrane may be shaken or the liquid may be stirred using a magnetic stirrer or the like, as necessary. It is preferred to avoid damage and/or fragmentation of the polymer membrane during shaking or stirring.

Another method for releasing the catalyst particles includes causing the catalyst particles formed on the substrate to penetrate a thin film of a second material in a liquid state formed on the surface of a first material in a solid state, solidifying the second material so that the catalyst particles become held by the solidified thin film of the second material, releasing only the substrate to transfer the catalyst particles to the solidified thin film of the second material, and then liquefying the solidified thin film to free the catalyst particles into the liquid second material.

The first material is used to keep the liquid second material in a thin-film state on its surface without flowing off, and any substance or material may be used that is in a solid state in the temperature range in which the method is carried out, including polymers such as polyethylene, polypropylene, acryl, polycarbonate and polyvinyl chloride, iron, aluminum, copper or other metals and their alloys, as well as their laminates or other composite forms. The first material may be in any suitable form such as a film, sheet, tray, block or the like, and the surface shape may have grooves or depressions at the sections that contact the second material.

The second material may be a material that undergoes phase conversion between a solid state and liquid state in the temperature range in which the method is carried out, or in other words, that has a melting point in the temperature range and has suitable flow properties to allow formation of a thin-film. Considering handling, safety and avoiding adverse effects on the catalyst particles, the material preferably has a melting point in the range of -20°C to 100°C. From this standpoint, the most preferred material is water (melting point: 0°C) .

The first material and second material may also be the same material. For example, when both the first material and the second material are water, only the surface of the solid water (ice) is heated to form a liquid water thin-film on the surface of the ice, the catalyst particles supported in the substrate are allowed to penetrate the water film, and the water film is frozen in that state to fix the catalyst particles in the ice, after which the substrate alone is separated from the catalyst particles fixed in the ice and then the ice is melted to obtain freely flowing, separated catalyst particle powder.

Penetration of the catalyst particles into the thin-film of the liquid second material can be accomplished by contacting the catalyst particles supported in the substrate with the thin-film of the second material. The liquid second material during this time is preferably kept in contact for a time sufficient to allow its permeation between each of the discrete catalyst particles. A lower flow property of the liquid second material will require that the contact be maintained for a longer time.

Solidification of the second material may be accomplished by lowering the temperature using conventional temperature regulating means. Various methods may be included such as, for example, lowering the ambient temperature with an air conditioner or the like, or lowering the temperature of the second material using heat conduction via the first material. When the second material is liquefied by heating, the temperature may be lowered by interrupting the heat application. The first material may also be combined with the temperature regulating means to provide both the functions of holding the liquid second material and regulating the temperature.

During solidification of the second material, the catalyst particles become held in the solidified thin-film of the second material by a stronger force than the adhesive force with the support substrate, and release of the substrate alone transfers them to the solidified thin-film of the second material. Transfer of the catalyst particles, i.e., release from the support substrate, can be accomplished using any appropriate means, such as a manual release apparatus, or an apparatus that fixes one end of the support substrate and pulls it off at a constant speed.

The solidified thin-film of the second material can be liquefied by raising the temperature in a manner opposite to solidification, using the same means as for the solidification of the second material. This allows the catalyst particles to be freed into the liquid second material.

Yet another method for releasing the catalyst particles may include a step of placing the substrate with the catalyst particles formed thereon into a cylindrical sealed container together with the liquid and beads and stirring the mixture, to free the catalyst particles into the liquid.

The cylindrical sealed container may be a container that is normally part of an apparatus known as a "bead mill." The cylindrical sealed container may include a rotor for stirring of its contents with the beads, or the cylindrical sealed container itself may be rotatable.

The liquid may be any solvent that does not dissolve the catalyst particles. For example, an alcohol such as methanol or ethanol, or water, may be conveniently used. The beads are preferably selected to match the sizes of the catalyst particles to be freed, and for example, with catalyst particle sizes of about 0.5 µm, they may be about 0.03-2 mm and preferably about 0.03-0.5 mm in size.

The catalyst particles can then be isolated by separating the catalyst particles from the liquid containing the catalyst particles (for example, liquid distillation with heating and/or under reduced pressure, or centrifugal separation). If necessary, an appropriate solvent may be used to rinse the catalyst particles and heating means such as an oven may be used for drying.

### Dispersing medium

The dispersing medium in the electrode catalyst dispersion is selected from water, organic solvents and combinations thereof. As such dispersing media there may be mentioned water, Cl-6 alcohols, Cl-6 ethers, Cl-6 alkanes, dialkylformamides, dialkyl sulfoxides and the like, and more specifically, water, methanol, ethanol, n-propanol, 2-propanol, 1-butanol, 2-butanol, 1,4-dioxane, n-propyl ether, dimethyl sulfoxide and the like, although there is no limitation to these.

The boiling point of the dispersing medium is preferably 40-160°C and more preferably 60-120°C, in order to impart satisfactory coating and drying properties to the electrode catalyst dispersion.

### Electrode catalyst dispersion

The content of catalyst particles in the electrode catalyst dispersion may be selected as suitable for the purpose and method of application. Generally speaking, the content of catalyst particles in the electrode catalyst dispersion may be about 1-50 wt% or 5-35 wt% with respect to the total weight of the dispersion. A composition further containing an ionic conductive polymer as a component in addition to the components of the electrode catalyst dispersion may also be used as an ink composition according to the disclosure. The claimed electrode catalyst dispersion further contains an ionic conductive polymer.

The electrode catalyst dispersion is produced by mixing and dispersing catalyst particles in a dispersing medium. The mixing means used may be a stirring apparatus such as a homogenizer, or a ball mill, bead mill, jet mill, ultrasonic device or the like, or any combination of these means.

The electrode catalyst dispersion obtained in the manner described above may be applied to a polymer electrolyte membrane (PEM) such as a solid polymer electrolyte membrane or a conductive material-containing gas diffusion layer (GDL), to form on such a film or layer an electrode catalyst layer comprising catalyst particles containing a non-conductive support and a conductive catalyst material covering the surface of non-conductive support. In order to increase the amount of catalyst per active area of the electrode catalyst layer, the electrode catalyst dispersion may be applied several times. A roll laminator, hot press or the like may also be used to apply pressure to the electrode catalyst layer with heating if necessary, for consolidation treatment. The consolidation treatment may usually be carried out at a temperature of about 100-200°C and a pressure of about 500-1000 kPa, and preferably at a temperature of 130-170°C and a pressure of 700-900 kPa. The consolidation treatment can attach the electrode catalyst layer to the PEM or GDL with a greater degree of strength. It is thus possible to obtain an electrode catalyst layer with excellent durability while maintaining output suited for the purpose. In the claimed electrode catalyst dispersion the catalyst particles and the ionic conductive polymer are dispersed in the dispersing medium.

### Ionic conductive polymer

The ionic conductive polymer used in the ink composition of the disclosure may include any of the suitable ionic conductive polymers known in the technical field, or a combination thereof. The ionic conductive polymer is preferably in solid or gel form. Useful ionic conductive polymers for the disclosure include ionic conductive materials such as polymer electrolytes and ion exchange resins. The ionic conductive polymer is preferably a proton-conductive ionomer.

Ionic conductive polymers that are useful for the disclosure include complexes of alkali metal or alkaline earth metal salts or proton acids with one or more polar polymers such as polyethers, polyesters or polyimides, or complexes of alkali metal or alkaline earth metal salts or proton acids with network or crosslinked polymers comprising the polar polymers as segments. Useful polyethers include polyoxyalkylenes such as polyethylene glycol, polyethyleneglycol monoether, polyethyleneglycol diether, polypropyleneglycol, polypropyleneglycol monoether and polypropyleneglycol diether; copolymers of these polyethers, for example, poly(oxyethylene-co-oxypropylene)glycol, poly(oxyethylene-co-oxypropylene)glycol monoether and poly(oxyethylene-co-oxypropylene)glycol diether; condensation products of ethylenediamine and polyoxyalkylenes; and esters such as phosphoric acid esters, aliphatic carboxylic acid esters or aromatic carboxylic acid esters of polyoxyalkylenes. For example, copolymers of polyethylene glycol and dialkylsiloxane, polyethyleneglycol and maleic anhydride or polyethyleneglycol monoethylether and methacrylic acid, which are known in the technical field, exhibit sufficient ionic conductivity for use as ionic conductive polymers for the disclosure.

Useful complex-forming reagents include alkali metal salts, alkaline earth metal salts and proton acid or proton acid salts. Useful counter ions for these salts include halide ions, perchlorate ion, thiocyanate ion, trifluoromethanesulfonate ion and borofluoride ion. Representative examples of such salts include lithium fluoride, sodium iodide, lithium iodide, lithium perchlorate, sodium thiocyanate, lithium trifluoromethanesulfonate, lithium borofluoride, lithium hexafluorophosphate, phosphoric acid, sulfuric acid, trifluoromethanesulfonic acid, tetrafluoroethylenesulfonic acid, hexafluorobutanesulfonic acid and the like, but there is no limitation to these.

Ion exchange resins that may be used in the ionic conductive polymer of the disclosure include hydrocarbon-based and fluorocarbon-based resins. Hydrocarbon-based ion exchange resins include phenol or sulfonic acid-based resins that exhibit a cation-exchange property by sulfonation or that exhibit an anion-exchange property by chloromethylation followed by conversion to the corresponding quaternary amine, and condensation resins such as phenol-formaldehyde, polystyrene, styrene-divinylbenzene copolymer, styrenebutadiene copolymer, styrene-divinylbenzene-vinyl chloride terpolymer and the like.

Fluorocarbon-based ion exchange resins include tetrafluoroethylene-perfluorosulfonylethoxyvinyl ether hydrate and tetrafluoroethylene-hydroxylated (perfluorovinyl ether) copolymer. When oxidation resistance and/or acid resistance is desired for the fuel cell cathode, for example, a fluorocarbon-based resin with sulfonic acid, carboxylic acid and/or phosphoric acid functionality is preferred. Fluorocarbon-based resins generally exhibit excellent resistance against oxidation by halogens, strong acids and bases, and are preferred for use as ionic conductive polymers for the disclosure. One group of fluorocarbon-based resins with sulfonic acid functional groups is the Nafion™ resin series (available from DuPont Chemicals, Wilmington, DE, ElectroChem, Inc., Woburn, MA and Aldrich Chemical Co., Inc., Milwaukee, WI). Similar resins that may be used include Flemion™ resin (Asahi Glass Co., Ltd., Tokyo, Japan) and Aciplex™ resin (Asahi Kasei Chemicals, Tokyo, Japan). Other fluorocarbon-based ion exchange resins that may be useful for the disclosure are olefin (co)polymers that contain arylperfluoroalkylsulfonylimide cation-exchange groups, represented by the general formula (I): CH₂=CH-Ar-SO₂-N⁻-SO₂ (C₁₊ₙF₃₊₂ₙ). In this formula, n is 0-11, preferably 0-3 and most preferably 0, Ar is substituted or unsubstituted divalent aryl, preferably monocyclic, and most preferably a divalent phenyl group (hereinafter referred to as "phenyl"). Ar may include a substituted or unsubstituted aromatic portion such as benzene, naphthalene, anthracene, phenanthrene, indene, fluorene, cyclopentadiene or pyrene, where the molecular weight of that portion is preferably no greater than 400 and more preferably no greater than 100. Ar may also be substituted with any group as defined in the present specification. One such resin is the ionic conductive material p-STSI obtained by radical polymerization of styrenyltrifluoromethylsulfonylimide (STSI) having the following formula (II): styrenyl-SO₂N⁻-SO₂CF₃.

Other ionic conductive materials which may be useful in the present disclosure include polymer electrolytes such as Nafion® (DuPont Chemicals, Wilmington DE) and Flemion™ (Asahi Glass Co. Ltd., Tokyo, Japan). The polymer electrolyte may be a copolymer of tetrafluoroethylene (TFE) and FSO2CF2CF2CF2CF2-O-CF=CF2, described in U.S. Patent No. 6,624,328, and U.S. Patent No. 7,348,088. The polymer electrolyte typically has an equivalent weight (EW) of 1200 or less, more typically 1100 or less, more typically 1000 or less, and may have an equivalent weight of 900 or less, or 800 or less.

### Ink composition

The ink composition of the claimed invention is as defined in the respective claims.

The contents of the catalyst particles and ionic conductive polymer in the ink composition are in the range of 55 vol%-90 vol% as the volume percentage of the catalyst particles based on the total volume of the catalyst particles and ionic conductive polymer in the solid portion (that is, catalyst particle volume:ionic conductive polymer volume = 55:45-90:10), and preferably in the range of about 60 vol%-85 vol% (that is, catalyst particle volume:ionic conductive polymer volume = about 60:40-85:15) .

If the volume percent of the catalyst particles is 55 vol% or greater, the number of catalyst particles will be adequate, resulting in a sufficient number of reaction sites and adequate battery output. Sufficient electrical contact will be formed between the catalyst particles, ensuring electrical conductivity of the electrode catalyst layer and adequate fuel cell output. In addition, the thickness of the ionic conductive polymer surrounding the catalyst particles in the electrode catalyst layer can be satisfactorily reduced to allow an acceptable level of diffusion of the reactive gas. Furthermore, the pores necessary for diffusion of the reactive gas will not become clogged by the ionic conductive polymer, thus avoiding the flooding phenomenon. If the volume percent of the catalyst particles is within 90 vol%, the ionic conductive polymer that can function as both a binder for the catalyst particles in the formed electrode catalyst layer and as an adhesive between the polymer electrolyte membrane and gas diffusion layer will be present in the electrode catalyst layer in an amount sufficient to exhibit those functions, thus ensuring stability for the catalyst layer structure.

When a fluorine-based ionic conductive polymer is used as the ionic conductive polymer, the contents of the catalyst particles and fluorine-based ionic conductive polymer in the ink composition are preferably in the range of about 90 wt%-98 wt% as the weight percentage of the catalyst particles based on the total weight of the catalyst particles and ionic conductive polymer (that is, catalyst particle weight:ionic conductive polymer weight = about 90:10-98:2), and more preferably in the range of about 91 wt%-97 wt% (that is, catalyst particle weight:ionic conductive polymer weight = about 91:9-97:3).

The solid content as the total of the catalyst particles and ionic conductive polymer in the ink composition is preferably about 1-50 wt% and more preferably about 5-35 wt% based on the total weight of the ink composition. If the total solid content is less than 1 wt%, it will be necessary to apply an abundant amount of ink composition repeatedly in order to obtain a catalyst layer of the necessary thickness when the electrode catalyst layer is formed by a method such as die coating or screen printing, and this may reduce the production efficiency for the electrode catalyst layer. In some cases, the catalyst particles may also settle and impair the stability of the ink. If the total solid content exceeds 50 wt%, the viscosity of the ink composition will become too high and may hinder use of the ink composition.

The ink composition may also contain, in addition to the catalyst particles and ionic conductive polymer described above, also a solvent or dispersing medium, as well as other solvents, viscosity modifiers and the like.

The solvent or dispersing medium is used for dissolution or dispersion of the ionic conductive polymer during the ink composition production process, and for appropriate modification of the viscosity of the ink composition. The solvent or dispersing medium may contain any organic compound and/or water that can dissolve or disperse the necessary amount of ionic conductive polymer, but in order to adjust the ink composition to a viscosity suitable for the subsequent application step, to satisfactorily disperse the catalyst particles and to adequately coat the catalyst particles with the ionic conductive polymer, it preferably includes at least one fluorine-containing compound selected from the group consisting of C1-6 fluorine-containing alcohols, C1-6 fluorine-containing ethers and C1-6 fluorine-containing alkanes.

Such fluorine-containing compounds preferably have a trifluoromethyl and/or chlorodifluoromethyl group and a hydroxyl and/or hydrogen in the molecule. Fluorine-containing compounds having such functional groups exhibit excellent ability to modify the viscosity of electrode catalyst inks.

Examples of such fluorine-containing compounds include, but are not limited to, 2,2,2-trifluoroethanol, 2,2,3,3,3-pentafluoropropanol, 2,2,3,4,4,4-hexafluorobutanol, 1,3-dichloro-1,1,2,2,3-pentafluoropropane, 1,1-dichloro-2,2,3,3,3-pentafluoropropane, 1,1,1,2,3,4,4,5,5,5-decafluoropentane, 1,1,1,3,3,3-hexafluoro-2-propanol, 1,1,1-trichloro-2,2,3,3,3-pentafluoropropane, 2,2,3,3,3-pentafluoropropylmethyl ether, 2,2,3,3,3-pentafluoropropylfluoromethyl ether and 1,1,3,3,3-pentafluoro-2-trifluoromethylpropylmethyl ether.

When the fluorine-containing compound is used as a solvent or dispersing medium, a portion of the fluorine will remain in the electrode catalyst layer when the ink composition is dried while the majority will evaporate off. The fluorine remaining in the electrode catalyst layer can reduce the flooding phenomenon caused by excess moisture accumulating in the electrode catalyst layer with extended operation of the fuel cell.

The solvent or dispersing medium may also contain one or more organic compounds selected from the group consisting of C1-6 fluorine-free alcohols, C1-6 fluorine-free ethers, C1-6 fluorine-free alkanes, dialkylformamides and dialkyl sulfoxides. Examples of such organic compounds include, but are not limited to, methanol, ethanol, n-propanol, 2-propanol, 1-butanol, 2-butanol, 1,4-dioxane, n-propyl ether and dimethyl sulfoxide.

The boiling points of the fluorine-containing compounds and other organic compounds in the solvent or dispersing medium are preferably 40-160°C and more preferably 60-120°C, in order to impart satisfactory coatability and drying properties to the ink composition.

When a solvent or dispersing medium is included in the ink composition, the weight percent of the solvent or dispersing medium is preferably about 50 wt%-99 wt% and more preferably about 65 wt%-95 wt% with respect to the total weight of the ink composition, in order to maintain the viscosity of the ink composition in the preferred range. When both the fluorine-containing compound and the organic compound as described above are included as solvents or dispersing media in the ink composition in addition to the ionic conductive polymer, the weight ratio of the fluorine-containing compound and the organic compound is preferably in the range of about 50:50-95:5 in order to adjust the viscosity of the ink composition to, for example, about 0.1 Pa·s-20 Pa·s.

The ink composition may further contain additives including water-repellent agents such as PTFE, polyvinylidene fluoride (PVDF) or perfluoroalkoxy resin (PFA), thickening agents, diluents, or inorganic fillers such as alumina or silica. Such additives may be included at about 0.01 wt%-5 wt% with respect to the total ink composition.

The ink composition is produced by mixing and dispersing the catalyst particles in a solution or dispersion containing the ionic conductive polymer. The mixing time after adding the catalyst particles to the solution or dispersion containing the ionic conductive polymer may be appropriately set depending on the dispersibility of the catalyst particles and the volatility of the solvent or dispersing medium. The mixing means used may be a stirring apparatus such as a homogenizer, or a ball mill, bead mill, jet mill, ultrasonic device or the like, or any combination of these means. If necessary, the dispersion may be carried out while using a mechanism or apparatus to maintain a constant range for the temperature of the ink composition.

When the ionic conductive polymer is mixed with a solvent or dispersing medium to prepare a solution or dispersion containing the ionic conductive polymer, a solution of the solid ionic conductive polymer premixed in water and/or an alcohol solvent such as methanol, ethanol or propanol may be prepared, and then this premixed solution may be combined with the solvent or dispersing medium.

The viscosity of the ink composition obtained by dispersion in this manner may be about 0.1-20 Pa·s, and is preferably about 1-20 Pa·s. An ink composition viscosity of less than 0.1 Pa·s will promote aggregation and settling of the catalyst particles in the mixture, while a viscosity of greater than 20 Pa·s will interfere with homogeneous mixing of the ionic conductive polymer and catalyst particles, and the excessive viscosity may impair the handling and uniform application of the ink composition. The viscosity is the value obtained with an ink composition temperature of 40-70°C. The viscosity can be appropriately adjusted by varying the proportion of the components in the ink composition and/or by using a viscosity modifier, as mentioned above. Measurement of the viscosity can be accomplished using a Brookfield viscometer, for example, in combination with a spindle having an appropriate shape.

### Modes of use

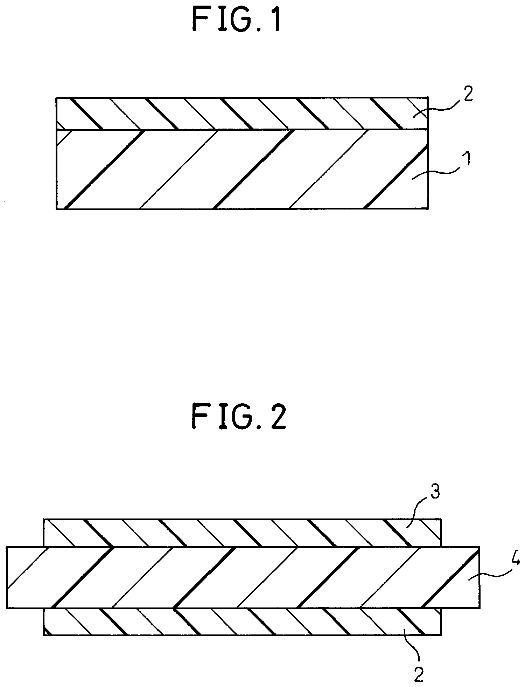

The ink composition obtained in the manner described above may be applied to a polymer electrolyte membrane (PEM) such as a solid polymer electrolyte membrane or a conductive material-containing gas diffusion layer (GDL), to form on such a film or layer an electrode catalyst layer comprising catalyst particles containing a non-conductive support and a conductive catalyst material covering the surface of non-conductive support, and an ionic conductive polymer. Fig. 1 is a cross-sectional view of a GDL1 having an electrode catalyst layer 2 (shown here as the cathode side) formed on the surface, and Fig. 2 is a cross-sectional view of a PEM 4 having electrode catalyst layers 2 and 3 (i.e., both the cathode and anode sides) formed on the two opposite surfaces. In Fig. 2, the electrode catalyst layers 2 and 3 are formed on the two opposite surfaces of the PEM 4, but the electrode catalyst layer 2 or 3 may, of course, be formed on only one surface of the PEM 4, depending on a GDL to be used.

The catalyst particles are dispersed for the most part evenly in the electrode catalyst layer of the disclosure, and the conductive catalyst material layers of adjacent catalyst particles are in contact with each other. Since the catalyst particles are dispersed in this state in the electrode catalyst layer of the disclosure, one of the features is that the layer or coating of the conductive catalyst material can provide electrical conductivity in addition to an electrochemical catalyst function. Without being restricted to any particular theory, it is nevertheless conjectured that the catalyst material coating on each of the catalyst particles contacts with at least a portion of the catalyst material coatings on adjacent catalyst particles thus forming channels between the catalyst particles through which electrons flow, so that electrical conductivity is provided as the individual channels integrally form a passageway or network for flow of electrons from an external charge. Assuming that electrical conductivity is provided by this mechanism, it is believed that formation of the channels through which electrons flow is affected by the shapes of the catalyst particles in the electrode catalyst layer and the properties of the catalyst material coating. Specifically, when the catalyst particles are shaped as long thin whiskers, for example, that have a relatively large surface area per volume, the possible points of contact with other catalyst particles is increased compared to spherical catalyst particles that approach the theoretical minimum surface area. Providing fine structures made of the catalyst material on the sides of the catalyst particles further increases the surface area of the catalyst material, thus additionally increasing the number of possible points of contact with other catalyst particles. Consequently, catalyst particles comprising non-conductive support whiskers used in the electrode catalyst layer according to an embodiment of the disclosure have a particularly advantageous structure for providing electrical conductivity, compared to ordinary conventional carbon support catalyst particles.

The polymer electrolyte membrane (PEM) may include any of the aforementioned suitable ionic conductive polymers or combination thereof, for the ionic conductive polymer in the ink composition. The ionic conductive polymer used in the PEM and the ionic conductive polymer in the ink composition may be the same or different.

The PEM may optionally be a composite film comprising a porous film material in combination with the ionic conductive polymer, and any suitable porous film may be used. A porous film used as a reinforcing film may have any desired structure with sufficient porosity to allow imbibing or absorption of a solution of at least one ionic conductive polymer, and sufficient strength to withstand the operating conditions of electrochemical cells. The porous film used for the disclosure preferably comprises a polymer that is inactive in the cell, such as a polyolefin or a poly(vinyl) halide (preferably fluoride) resin. Expanded PTFE films such as Poreflon™ by Sumitomo Electric Industries, Ltd., Tokyo, Japan or Teratex™ by Teratec, Inc., Feasterville, PA may also be used.

Porous films useful for the disclosure also include microporous films fabricated by thermally induced phase separation (TIPS), such as described in USP 4,539,256, USP 4,726,989, USP 4,867,881, USP 5,120,594 and USP 5,260,360, for example. A TIPS film is preferably in the form of a film, membrane or sheet material appearing as numerous spaced and irregularly dispersed equiaxial thermoplastic polymer particles with nonuniform shapes, if necessary coated with a liquid that is immiscible with the polymer at the crystallization temperature of the polymer. The micropores defined by the particles preferably have sizes sufficient for the electrolyte to be incorporated in them.

Polymers suitable for fabrication of films by a TIPS process include thermoplastic polymers, heat-sensitive polymers, and blends of these polymers so long as the blended polymers are compatible. A heat-sensitive polymer such as ultrahigh molecular weight polyethylene (UHMWPE) cannot be directly melted, but melting is possible in the presence of a diluent that lowers the viscosity enough for the melting step.

Examples of suitable polymers include crystalline vinyl polymers, condensation polymers and oxidation polymers. Representative examples of crystalline vinyl polymers include high density and low-density polyethylene, polypropylene, polybutadiene, polyacrylates such as poly(methyl methacrylate), and fluorine-containing polymers such as poly(vinylidene fluoride). Examples of useful condensation polymers include polyesters such as poly(ethylene terephthalate) and poly(butylene terephthalate), polyamides including numerous Nylon™ series, as well as polycarbonates and polysulfones. Examples of useful oxidation polymers include poly(phenylene oxide) and poly(etherketone). Polymer and copolymer blends are also useful for the disclosure. Preferred polymers for use as reinforcing films for the disclosure include crystalline polymers such as polyolefins or fluorine-containing polymers because of their resistance to hydrolysis and oxidation. Preferred polyolefins include high-density polyethylene, polypropylene, ethylene-propylene copolymer and poly(vinylidene fluoride).

Preferred membranes are 800-1100 equivalent fluorocarbon-based ion exchange resins with sulfonic acid functional groups, including Nafion™ 117, 115 and 112. An example of a preferred method of use is described below. A purchased Nafion™ membrane is pretreated by immersion a) for 1 hour in boiling ultrapure water, b) for 1 hour in boiling 3% H₂O₂, c) for 1 hour in boiling ultrapure water, d) for 1 hour in boiling 0.5 M H₂SO₄ and e) for 1 hour in boiling ultrahigh-purity deionized water (DI H₂O). The Nafion is then kept in the ultrahigh-purity DI water until the time of use. Before forming an MEA, the Nafion is placed between several layers of clean linen fabrics and dried at 30°C for 10-20 minutes.

The gas diffusion layer (GDL) may be any material capable of collecting a current from the electrode while passing the reactive gas. The GDL provides pores through which gaseous reactive substances and water vapor approach the catalyst and membrane, and collects the current produced in the catalyst layer in order to apply electric power for external load. The GDL is usually carbon paper, or a mesh or a porous/permeable web or fabric of a conductive material such as carbon and metal. The GDL may be subjected to water-repellent treatment by a method known in the technical field, using a water-repellent material such as polytetrafluoroethylene (PTFE). A preferred GDL material is carbon paper (U105, approximately 240 µm thickness) available from Mitsubishi Rayon Co., Ltd.

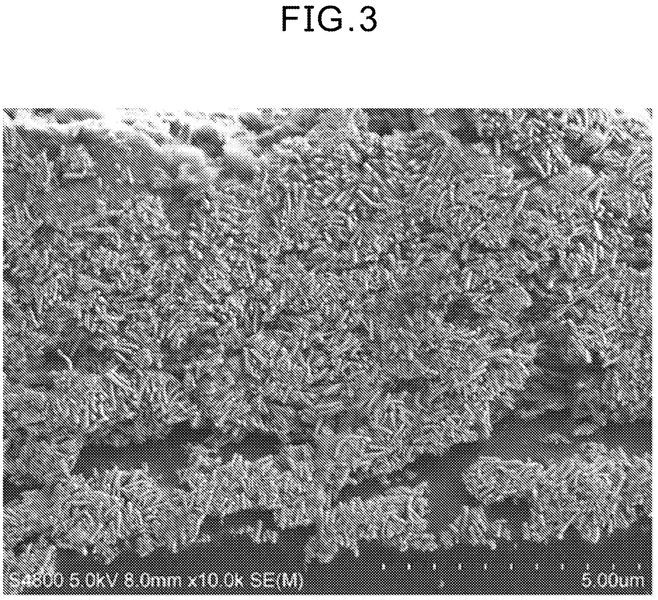

The electrode catalyst layer is formed on the surface of the PEM or GDL by applying an ink composition containing volatilizing components such as the fluorine compound used as a solvent or dispersing medium, to a desired uniform thickness on the surface of the PEM or GDL, and then drying it to remove the volatilizing components. As an example, the cross-section of an electrode catalyst layer formed in this manner is shown in the scanning electron microscope photograph of Fig. 3.

The method of applying the ink composition may employ any means known in the technical field of applying conventional ink compositions, such as a die coater, screen printer, doctor blade, bar coater, curtain coater, or spraying, hand-brushing, dipping or ink jet apparatus, or the like. Another method, for example, may involve casting and drying the ink composition onto a support substrate such as a polytetrafluoroethylene (PTFE) sheet to form a temporary electrode catalyst layer on the substrate, laminating the electrode catalyst layer in contact with the PEM and hot pressing, and then releasing only the PTFE sheet to bond the electrode catalyst layer to the PEM.

Drying of the ink composition may be accomplished by any appropriate method known in the technical field, and for example, an oven or the like may be used for drying at atmospheric pressure, or a hot press or the like may be used for drying under pressure.

The ink composition may also be applied and dried repeatedly until the desired electrode catalyst layer thickness is obtained.

The thickness of the electrode catalyst layer formed in this manner can be appropriately determined by a person skilled in the art according to the shapes of the catalyst particles, the surface area of the catalyst material, the type of ionic conductive polymer, the mixing ratio of the catalyst particles and ionic conductive polymer, and the desired voltage or output. For use as a cathode, for example, it will generally be about 0.3-20 µm, preferably about 0.5-10 µm and more preferably about 1-5 µm. A range of 0.3 µm-20 µm allows a uniform film to be formed while also facilitating diffusion of gas (for example, hydrogen or reformed gas supplied to the anode or oxygen or air supplied to the cathode) through the electrode catalyst layer.

The distribution of the catalyst material in the electrode catalyst layer may be represented as the electrochemical surface area/volume ratio. The electrochemical surface area/volume ratio can be determined by the H₂ adsorption/desorption process described in Canadian Patent Application No. 2,195,281. This process is based on the phenomenon of H₂ adsorption/desorption on the surface of Pt at the potential just before generation of hydrogen. It is well known that in this process, a monolayer of hydrogen is adsorbed onto the Pt surface and a charge of 220 µC per 1 cm² of Pt area is delivered. Integration of the hydrogen adsorption/desorption peak allows calculation of the coefficient of the active surface area with respect to the geometric surface area.

The electrochemical surface area/volume ratio of the catalyst material in the electrode catalyst layer of the disclosure is preferably about 50-200 cm²/mm³ and even more preferably about 80-130 cm²/mm³. If the electrochemical surface area/volume ratio of the catalyst material is not more than 200 cm²/mm³, the volume of the ionic conductive polymer will be sufficient with respect to the volume of the catalyst particles, thus allowing it as a binder to adequately hold the catalyst particles in the catalyst layer. If the electrochemical surface area/volume ratio of the catalyst material is at least 50 cm²/mm³, the reaction sites will be sufficient to provide satisfactory catalyst performance and/or satisfactory electrical conductivity of the electrode catalyst layer.

The distribution of the catalyst material of the electrode catalyst layer can be expressed as the density, i.e. the weight/volume ratio, of the catalyst material in the electrode catalyst layer, by dividing the weight of the catalyst material by the volume of the catalyst layer. The weight of the catalyst material can be calculated from the weight increase caused by the catalyst material adhering to the non-conductive support when the catalyst material is applied, and the thickness of the layer can be determined by examining a cross-section of the film with an electron microscope.

The density of the catalyst material in the electrode catalyst layer of the disclosure is preferably about 0.9-3.6 mg/mm³ and even more preferably 1.4-2.3 mg/mm³ or greater. If the density of the catalyst material is at least 0.9 g/mm³, the reaction sites will be sufficient to provide satisfactory catalyst performance and/or satisfactory electrical conductivity of the electrode catalyst layer.

Particularly when it is necessary to exhibit a higher voltage, i.e. higher output, in the low current density region of the fuel cell, it is preferred to increase the amount of catalyst particles (catalyst material) per unit area of the active area of the fuel cell. Examples of methods of increasing the amount of catalyst material per unit area include increasing the catalyst particle content in the ink composition, increasing the thickness of the electrode catalyst layer, and adjusting the shape of the non-conductive support to allow loading of more of the catalyst material on the support.

A reasonable amount of conventional carbon-supported catalyst particles may also be included in the electrode catalyst layer. Any carbon-supported catalyst particles known in the art may be used, and the catalyst material on the carbon-supported particles is preferably the same as the conductive catalyst material of the catalyst particles. The carbon-supported catalyst particle content may be appropriately established in a range such that corrosion loss of the carbon support does not matter during practical use. Using an appropriate amount of carbon-supported catalyst particles may in some cases allow further increase in the electrical conductivity.

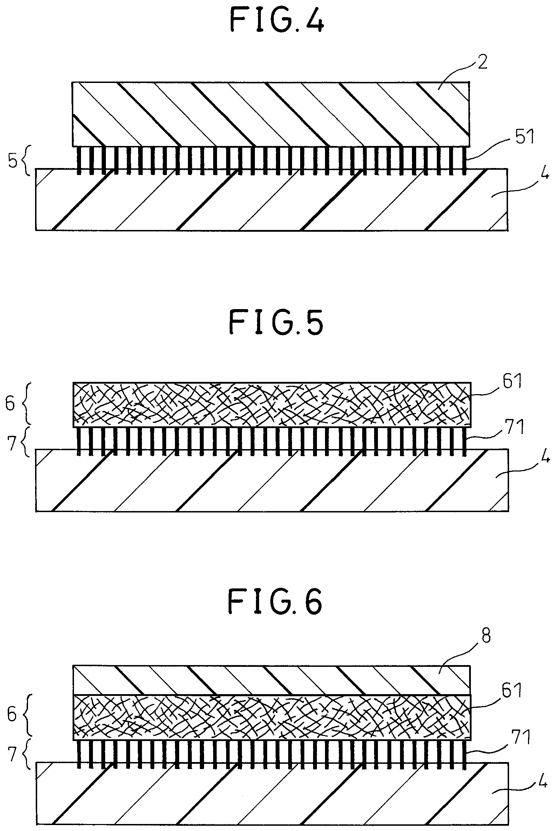

A second electrode catalyst layer composed of second catalyst particles may also be provided between the PEM and the electrode catalyst layer formed using the ink composition. The second catalyst particles comprise non-conductive support whiskers and a conductive catalyst material which covers the surface of non-conductive support whiskers, and these are at least partially embedded in the PEM to form a second electrode catalyst layer on the surface of the PEM. Fig. 4 is a general cross-sectional view of an electrode catalyst layer 2 formed using an ink composition, and a second electrode catalyst layer 5 composed of second catalyst particles 51 embedded in the surface of the PEM 4. In the drawing, one of the ends of each of the second catalyst particles 51 represented by the elongated whiskers is embedded to a certain depth from the surface of the PEM 4, while the other end is in contact with the electrode catalyst layer 2.

The mean diameter and mean aspect ratio of the whisker cross-section for the non-conductive support whiskers in the second catalyst particles may be in the aforementioned ranges for the catalyst particles. The amount of catalyst material per unit area of the second electrode catalyst layer may generally be about 0.01-2 mg/cm², and is preferably about 0.05-1 mg/cm².

The second electrode catalyst layer may be formed on the surface of the PEM by using catalyst particles formed on a support substrate as described above as the second catalyst particles, and thermocompression bonding the PEM on the catalyst particle-supporting surface of the support substrate to transfer the catalyst particles onto the polymer membrane. The thermocompression bonding may be carried out using any appropriate means such as a hot press or laminator, at a temperature at which the PEM at least partially melts or softens. Transfer of the catalyst particles to the PEM may be accomplished using any appropriate means such as, for example, manual release of the support substrate, or using an apparatus that anchors one end of the support substrate and pulls it off at a fixed rate. The PEM may also be supported by another substrate (backing substrate) such as a polyimide film, depending on the workability and the mechanical strength of the PEM.

Application and drying of an ink composition in this manner on the second electrode catalyst layer formed as described above produces a laminated electrode catalyst layer. According to this embodiment, it is possible to ensure output necessary for the intended purpose by adjusting the electrode catalyst layer to the desired thickness while utilizing the very high catalyst specific activity of the second electrode catalyst layer, so that the amount of catalyst material used can be kept to a minimum while increasing the catalytic activity of the electrode as a whole. Also, since the ionic conductive polymer in an electrode catalyst layer formed using the ink composition contributes to moisture freeze proofing and moisture retention of the electrode catalyst layer, this embodiment can produce a fuel cell stack with a superior cold-start property, and allows stable operation of fuel cells even under low-moisture conditions.

The first electrode catalyst layer composed of the first catalyst particles may be laminated on the second electrode catalyst layer composed of the second catalyst particles at least partially embedded in the PEM, and these electrode catalyst layers consolidated together to form a laminated electrode catalyst layer. The first and second catalyst particles include non-conductive support whiskers and a conductive catalyst material that covers the surface of non-conductive support whiskers. Fig. 5 schematically shows a cross-sectional view of the first electrode catalyst layer 6 composed of the first catalyst particles 61 and the second electrode catalyst layer 7 composed of the second catalyst particles 71 embedded in the surface of the PEM 4. In the drawing, one of the ends of each of the second catalyst particles 71 represented by the elongated whiskers is embedded to a certain depth from the surface of the PEM 4, while the other end is in contact with the first electrode catalyst layer 6. In this drawing, the orientation of the first catalyst particles 61 is irregular, but they may instead be oriented in an essentially regular manner.

The mean diameter and mean aspect ratio of the whisker cross-section for the non-conductive support whiskers in the first and second catalyst particles may be in the aforementioned ranges for the catalyst particles. The amount of catalyst material per unit area of the first electrode catalyst layer may generally be about 0.01-5 mg/cm², and is preferably about 0.05-2 mg/cm². The amount of catalyst material per unit area of the second electrode catalyst layer may generally be about 0.01-2 mg/cm², and is preferably about 0.05-1 mg/cm². The mean volume density of the first electrode catalyst layer may usually be from about 0.4 to 0.8 cm³/cm³.

The first electrode catalyst layer may be formed using an electrode catalyst dispersion according to the disclosure. For example, the electrode catalyst dispersion may be applied by bar coating, spraying, hand brushing, dipping, ink-jet printing or the like onto the second electrode catalyst layer formed in the manner described above, and dried using an oven, for example, if necessary. The first and second electrode catalyst layers may then be consolidated by pressure, with heating if necessary, using a roll laminator, hot press or the like, to form an electrode catalyst layer comprising the laminated first and second electrode catalyst layers. The consolidation treatment may usually be carried out at a temperature of about 100-200°C and a pressure of about 500-1000 kPa, and preferably at a temperature of 130-170°C and a pressure of 700-900 kPa. The consolidation treatment bonds the first electrode catalyst layer and second electrode catalyst layer together with sufficient strength for practical use, thus helping to prevent peeling or separation of the electrode catalyst layers at their interface during use.

According to this embodiment, it is possible to increase output by the first electrode catalyst layer while utilizing the very high catalyst specific activity of the second electrode catalyst layer, so that the amount of catalyst material used can be kept to a minimum while increasing the catalytic activity of the electrode as a whole, in order to meet demands for high absolute output.

A moisture retention layer may also be provided on the first electrode catalyst layer. Fig. 6 schematically shows a cross-sectional view of a moisture retention layer 8 formed on the first electrode catalyst layer 6 in the embodiment illustrated in Fig. 5. The moisture retention layer comprises an ionic conductive polymer such as described above and a conductive filler such as carbon black (for example, acetylene black), antimony oxide or tin oxide, where the conductive filler is dispersed in the ionic conductive polymer. A moisture retention layer may also be formed by applying and drying an ink composition of the disclosure. Here, the catalyst particles are included as conductive filler in the moisture retention layer, but in this case the conducting material covering the non-conductive support may either exhibit or not exhibit catalytic activity, depending on the intended purpose.

The thickness of the moisture retention layer may generally be 1 µm to 30 mm, and is preferably 3 µm to 10 mm. The content of the conductive filler in the moisture retention layer may generally be about 20 to 80 wt% and is preferably 40 to 60 wt%, based on the total weight of the moisture retention layer. The content of the ionic conductive polymer in the moisture retention layer may generally be about 80to 20 wt% and is preferably 60 to 40 wt%, based on the total weight of the moisture retention layer.

The moisture retention layer may be formed, for example, by producing a moisture retention layer ink comprising the ionic conductive polymer and conductive filler dissolved or dispersed in a solvent, and applying the moisture retention layer ink onto the first electrode catalyst layer by the method described for the ink composition of the disclosure, and drying it if necessary. The types of usable solvents and their amounts are the same as explained for the ink composition of the disclosure.

Since the ionic conductive polymer in the moisture retention layer contributes to moisture freeze proofing and moisture retention of the electrode catalyst layer, this embodiment allows a fuel cell stack to be produced which has a superior cold-start property, and allows stable operation of fuel cells even under low-moisture conditions.

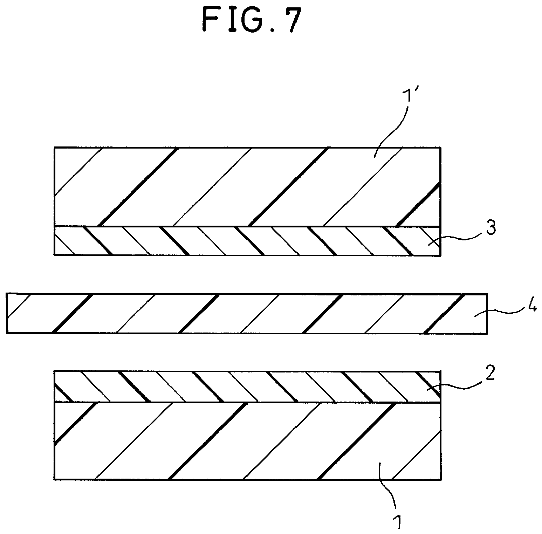

The present disclosure also provides a membrane electrode assembly (MEA) comprising a PEM, a cathode and anode and if necessary a GDL, wherein the electrode catalyst layer obtained according to the disclosure is present on at least the cathode. Fig. 7 shows an exploded cross-sectional view of an example of a membrane electrode assembly (MEA). The MEA shown in Fig. 7 has a construction wherein there are situated on one side of a polymer electrolyte membrane (PEM) 4, a cathode catalyst layer 2 adjacent to the PEM 4 and a cathode gas diffusion layer 1 adjacent to the cathode catalyst layer 2 on the opposite side of the PEM 4 if necessary, and there are situated on the other side of the PEM 4 an anode catalyst layer 3 adjacent to the PEM 4 and an anode gas diffusion layer 1' adjacent to the anode catalyst layer 3 on the opposite side of the PEM 4 if necessary. These layers are contact bonded using, for example, thermocompression bonding to form the MEA. Using an electrode catalyst layer of the disclosure in a cathode can avoid the problem of lower performance due to carbon support corrosion, that has occurred with catalyst particles of the prior art. An anode catalyst layer commonly known in the technical field for use in MEAs may also be used in the anode in addition to the electrode catalyst layer. This type of anode catalyst layer may also include catalyst particles that are commonly used for MEAs in the prior art such as, for example, carbon-supported platinum catalysts or graphitized carbon-supported platinum catalysts, with an ionic conductive polymer mentioned above such as Nafion™, and the composition prepared by adding a solvent to these components may be formed into the electrode catalyst layer by the same method as for an ink composition obtained according to the disclosure. Particularly in cases where the fuel cell must exhibit durability, an electrode catalyst layer obtained according to the disclosure may be used on both the anode and cathode.

The MEA may be fabricated using any desired method known in the technical field. When the electrode catalyst layer is formed on the two opposite surfaces of the PEM as explained above, it may be used directly or it may be bonded with sandwiching of both sides of the PEM with a GDL. When an electrode catalyst layer is formed on the GDL, it is bonded to the PEM with the electrode catalyst layer adjacent to the PEM. Also, the MEA may be fabricated using an appropriate combination of electrode catalyst layers formed on both a PEM and GDL. Bonding of the PEM, electrode catalyst layer and GDL may be accomplished using, for example, a hot press or roll press, and using an adhesive as disclosed in Japanese Unexamined Patent Publication No. 7-220741 or elsewhere. Particularly when the electrode catalyst layer is formed on a GDL, it is preferred for the electrode catalyst layer and PEM to be bonded using a hot press or the like during fabrication of the MEA in order to sufficiently integrate the electrode catalyst layer and PEM.

The MEA fabricated in this manner may be incorporated into a polymer electrolyte fuel cell to be used as a mobile power supply for vehicles, as a station power supply, or the like. Since an electrode catalyst layer fabricated according to the disclosure has excellent properties and especially excellent durability, it can be used in MEAs and fuel cell stacks for a variety of purposes, but it is particularly suitable for purposes requiring repeated starting and stopping, such as for automobiles. In the embodiment comprising an ionic conductive polymer in the electrode catalyst layer and the embodiment provided with a moisture retention layer, the ionic conductive polymer can prevent moisture freezing so that a fuel cell stack can be fabricated that has an excellent cold-start property in addition to the aforementioned durability, and that is capable of stable operation even under low-moisture conditions.

The fuel cell may have any construction known in the technical field, but it will generally have a structure wherein the MEA is sandwiched with separators and if necessary a sealant (gasket). As separators sandwiching the MEA, there may be used any materials known in the technical field, including carbon-containing materials such as densified carbon graphite, carbon sheets or the like, or metal-containing materials such as stainless steel. A separator has the function of separating air from fuel gas, and gas passages serving as channels for air and fuel gas may be formed therein. The thicknesses, sizes and presence of gas passages of the separators may be appropriately established by a person skilled in the art in consideration of the output characteristics demanded of the fuel cell. The sealant may be any desired material that functions as a seal to prevent leakage of gas in the MEA, and for example, it preferably consists of a compressible material such as silicone or a fluoropolymer material. When it is desirable to increase the strength of the sealant, there may be used a composite sealant having a reinforcing material such as glass fibers covered with the aforementioned material.

The fuel cell may be used as a single cell with a single MEA, or a plurality of MEAs may be laminated with separators interposed there-between to form a stack connected in series in order to obtain higher voltage or output from the fuel cell. The shape, configuration and electrical connection in the fuel cell may be appropriately established by a person skilled in the art so as to obtain the desired battery characteristics, such as voltage.

### EXAMPLES

Representative examples of the disclosure will now be described, and it will be appreciated by those skilled in the art that various modifications and adaptations of the embodiments described below may be implemented within the scope of the claims of the present application.

Non-conductive support whiskers were formed on a polyimide substrate with a thermosetting resin layer having a prism-like surface shape, with a height of 6-7 µm and a crest-to-crest distance of 10 µm such as described in International Patent Publication No. 2001/11704, by thermal vapor deposition and vacuum annealing of the organic pigment C. I. Pigment Red 149, i.e., N,N'-di(3,5-hexyl)perylene-3,4,9,10-bis(dicarboximide), by the method described in USP 4812352 and USP 5039561. The obtained non-conductive support whiskers consisted of numerous whisker-like particles with diameters of 30-50 nm, lengths of 1-2 µm and mean aspect ratios of approximately 5, grown on the substrate in the perpendicular direction to form a layer, and the areal number density was approximately 30 whiskers/µm² (about 3 × 10⁹ whiskers/cm²).

Next, the method described in International Patent Publication No. WO99/19066 was employed to coat a platinum alloy thin-film onto the surface of the non-conductive support whiskers in a magnetron sputtering apparatus equipped with three sources, to fabricate a polyimide sheet having Pt-perylene catalyst particles formed in a laminar fashion. The platinum content per unit area of the polyimide sheet was 0.20 mg/cm².

The catalyst particle powder was separated from the polyimide sheet on which the Pt-perylene catalyst particles were formed, using the three methods described below.
(1) The polyimide sheet on which the Pt-perylene catalyst particles were formed was laminated onto a fluorine-based electrolyte membrane pre-cast to a thickness of 20 µm on a separate polymer sheet base, with the catalyst particle layer and electrolyte membrane facing each other, and this was sandwiched between buffer sheets and the laminate was attached together with a heat laminator. The polyimide sheet alone was released and removed from the attached laminate to obtain an electrolyte membrane sheet with the Pt-perylene catalyst particles transferred thereto. The electrolyte membrane was also released and removed from the polymer sheet base, and then immersed in a water/methanol mixture at 55°C and gently stirred to free the Pt-perylene catalyst particles into the mixture. The electrolyte membrane was removed from the mixture and the mixture was centrifuged to settle the catalyst particles down. A syringe was used to remove the transparent supernatant, and then a fresh water/methanol mixture was added and thoroughly stirred therewith, after which centrifuging and supernatant removal were performed in the same manner and finally the precipitated and separated catalyst particles were dried into a powder.
(2) The surface of smooth ice formed in a stainless steel pan was melted by blowing in hot air from a drier, to form a thin-film of liquid water. A polyimide sheet having Pt-perylene catalyst particles formed therein was laminated onto the liquid surface to contact the catalyst particles with the water. The laminate was transferred into a freezer and the liquid water was frozen. The laminate was then taken out of the freezer and the polyimide sheet was released. This caused the Pt-perylene catalyst particles to be transferred onto the ice. After melting the ice by again blowing hot air from the drier onto the surface of the catalyst particle-transferred ice, the catalyst particles were separated out of the liquid water and dried into powder.
(3) A polyimide sheet having Pt-perylene catalyst particles formed therein was set inside a cylindrical glass container and adjusted so that the polyimide surface contacted the inner wall of the glass. A suitable amount of water and zirconia beads (0.5 mm diameter) were placed in the glass container, and the cylindrical glass container was set on a biaxial rotating table for rotation along its axis. The Pt-perylene catalyst particles on the polyimide substrate were contacted with the beads and freed into the water. The beads were separated with a 0.3 mm stainless steel mesh and dried to powder.

No significant differences were found when the catalyst particles obtained by methods (1)-(3) described above were observed with a scanning electron microscope to examine their sizes and shapes, and therefore the catalyst particles obtained by method (1) were used for all of the following examples.

A cathode ink composition was prepared in the following manner.
The following Examples 1 to 5 describe ink compositions of the claimed invention.

### Example 1 (Pt-perylene catalyst)

A 1 g portion of a Pt-perylene catalyst obtained according to the procedure described above was placed in a reagent bottle together with 0.95 g of an ionic conductive polymer (trade name: Nafion DE1021 - 10% aqueous solution, product of DuPont) and 5.38 g of 1,1,1,3,3,3-hexafluoro-2-propanol (product of Wako Pure Chemical Industries, Ltd.), and then 3 g of zirconia beads (0.8 mm diameter) were added and the reagent bottle was sealed and shaken for 1 hour with a paint shaker to prepare a catalyst-dispersed ink composition.

### Examples 2 and 3 (Pt-perylene catalysts)

A 1 g portion of a Pt-perylene catalyst obtained according to the procedure described above was placed in a reagent bottle together with 0.6 g of an ionic conductive polymer (trade name: Nafion DE1021 - 10% aqueous solution, product of DuPont) and 3.4 g of 1,1,1,3,3,3-hexafluoro-2-propanol (product of Wako Pure Chemical Industries, Ltd.), and then 3 g of zirconia beads (0.8 mm diameter) were added and the reagent bottle was sealed and shaken for 1 hour with a paint shaker to prepare a catalyst-dispersed ink composition.

### Example 4 (Pt-perylene catalyst)

A 1 g portion of a Pt-perylene catalyst obtained according to the procedure described above was placed in a reagent bottle together with 0.35 g of an ionic conductive polymer (trade name: Nafion DE1021 - 10% aqueous solution, product of DuPont) and 1.98 g of 1,1,1,3,3,3-hexafluoro-2-propanol (product of Wako Pure Chemical Industries, Ltd.), and then 3 g of zirconia beads (0.8 mm diameter) were added and the reagent bottle was sealed and shaken for 1 hour with a paint shaker to prepare a catalyst-dispersed ink composition.

### Example 5 (Pt-perylene catalyst)

A 1 g portion of a Pt-perylene catalyst obtained according to the procedure described above was placed in a reagent bottle together with 1.07 g of an ionic conductive polymer (trade name: Nafion DE1021 - 10% aqueous solution, product of DuPont) and 6.06 g of 1,1,1,3,3,3-hexafluoro-2-propanol (product of Wako Pure Chemical Industries, Ltd.), and then 5 g of zirconia beads (0.8 mm diameter) were added and the reagent bottle was sealed and shaken for 1 hour with a paint shaker to prepare a catalyst-dispersed ink composition.

### Comparative Example 1 (Pt-perylene catalyst)

A 0.5 g portion of a Pt-perylene catalyst obtained according to the procedure described above was placed in a reagent bottle together with 0.77 g of an ionic conductive polymer (trade name: Nafion DE1021 - 10% aqueous solution, product of DuPont) and 5.60 g of 1,1,1,3,3,3-hexafluoro-2-propanol (product of Wako Pure Chemical Industries, Ltd.), and then 3 g of zirconia beads (0.8 mm diameter) were added and the reagent bottle was sealed and shaken for 1 hour with a paint shaker to prepare a catalyst-dispersed ink composition.

### Comparative Example 2 (Pt-perylene catalyst)

A 2 g portion of a Pt-perylene catalyst obtained according to the procedure described above was placed in a reagent bottle together with 0.2 g of an ionic conductive polymer (trade name: Nafion DE1021 - 10% aqueous solution, product of DuPont) and 2.65 g of 1,1,1,3,3,3-hexafluoro-2-propanol (product of Wako Pure Chemical Industries, Ltd.), and then 2 g of zirconia beads (0.8 mm diameter) were added and the reagent bottle was sealed and shaken for 1 hour with a paint shaker to prepare a catalyst-dispersed ink composition.

### Comparative Example 3 (Carbon-supported platinum catalyst)

An ink composition was prepared in the same manner as Example 1, except for using 1.98 g of a carbon-supported platinum catalyst (trade name: CAQ062705AB - Pt 50%/C 50%, product of N.E. Chemcat), 8.88 g of an ionic conductive polymer (trade name: Nafion DE1021 - 10% aqueous solution, product of DuPont) and 8 g of purified water.

### Comparative Example 4 (Graphitized carbon-supported platinum catalyst)

An ink composition was prepared in the same manner as Comparative Example 1, except that the catalyst of Comparative Example 3 was changed to a graphitized carbon-supported platinum catalyst (trade name: TEC10EA50E - Pt 50%/C 50%, product of Tanaka Kikinzoku Kogyo).

Using the same materials and mixing ratios as for the cathode catalyst ink composition of Comparative Example 3, and using the catalyst, ionic conductive polymer and purified water in amounts of 9.9 g, 44.4 g and 40 g respectively, stirring was performed with a homogenizer (trade name: PHYSCOTRON NS-51 by Microtec Nition Co., Ltd.) at about 15,000 rpm for 30 minutes to prepare an anode catalyst ink composition.

A 40% methanol solution of the ionic conductive polymer (sulfonate group equivalents: 800, product of Dyneon) was cast onto a 50 µm-thick polyimide substrate (trade name: KAPTON, by DuPont) to a (dry) thickness of 30 µm using a die coater, and then annealing was performed at 200°C to obtain a PEM.

First, carbon paper (trade name: U105, by Mitsubishi Rayon Co., Ltd.) was immersed for 1 minute in a 5% PTFE aqueous dispersion and dried for 20 minutes in an oven set to 100°C for dispersion of the PTFE into the carbon paper. Next, acetylene black (trade name: DENKA BLACK, 50% pressed, product of Denki Kagaku Kogyo Co., Ltd.) and the PTFE aqueous dispersion were combined and dispersed to prepare a conductive water-repellent ink. The conductive water-repellent ink was evenly applied onto one side of the water-repellent treated carbon paper prepared as described above using the doctor blade method, dried for 20 minutes in an oven set to 100°C and then hot fired for 3 minutes in a ceramic oven set to 320°C to fabricate a GDL.

Each of the cathode catalyst ink compositions of Examples 1-5 and Comparative Examples 1-4 was coated onto the conductive water-repellent ink side of such a GDL having a size of 5 cm × 5 cm by hand-brushing and dried to obtain a cathode catalyst layer. For Example 3, the same ink composition as in Example 2 was coated twice and dried to increase the thickness of the electrode catalyst layer, thus increasing the amount of catalyst particles (i.e., the amount of platinum) per unit area.

Similarly, the anode catalyst ink was coated onto a separate GDL with a size of 5 cm × 5 cm by die coating to form an anode catalyst layer.

The PEM fabricated in the manner described above was sandwiched by two GDLs with the anode catalyst layer and cathode catalyst layer, obtained as described above, adjacent to the PEM, and the catalyst layers were laminated in close contact with the PEM by thermocompression using a hot press at 138°C, 1800 kPa for 7 minutes to fabricate an MEA.

A separator containing gas passages, and a sealant (gasket), were placed on the MEA fabricated in this manner and then sandwiched and held between gold-plated stainless steel current collectors and clamped to the prescribed contact pressure to create a single polymer electrolyte fuel cell (effective power generation area: 25 cm²).

### Conditioning procedure for polymer electrolyte fuel cell

Using the single polymer electrolyte fuel cell, the temperature of the single cell was adjusted to 73°C, hydrogen (dew point: 72°C) was supplied as fuel gas to the anode side at a flow rate of 400 sccm while air (dew point: 70°C) was supplied as an oxidizing agent to the cathode side at a flow rate of 900 sccm, and voltage scanning operation was carried out for 8 hours in a voltage range of 0.85 V-0.25 V for conditioning of the polymer electrolyte fuel cell.

### Evaluation of initial characteristic

The final current density (A/cm²)-voltage (V) curve in the conditioning procedure was recorded as the initial output characteristic of the single cell. A potentiostat was also connected to the single cell, and while supplying hydrogen (dew point: 80°C) to the anode and nitrogen (dew point: 80°C) to the cathode each at a flow rate of 500 sccm, with a cell temperature of 73°C, the cyclic voltammogram (CV) was measured and the electrochemical surface area of the cathode catalyst was calculated.

### High voltage sustain test

A high voltage (1.5 V) sustain test was conducted to evaluate the durability of the cathode catalyst under various operating conditions or with the cathode exposed to the high potential that can occur upon repeated starting and stopping of the fuel cell. The single fuel cell was regulated to a temperature of 80°C, hydrogen (dew point: 80°C) was supplied to the anode while nitrogen (dew point: 80°C) was supplied to the cathode, each at 500 sccm, and a potentiostat was connected while a voltage of 1.5 V was sustained for 30 minutes. The cell temperature was then lowered to 73°C and the CV was measured. The hydrogen gas at the anode side was then set to a dew point of 72°C and a flow rate of 400 sccm and the cathode side was switched to air (dew point: 70°C, flow rate: 900 sccm), for voltage scanning operation within a range of 0.85 V-0.25 V.

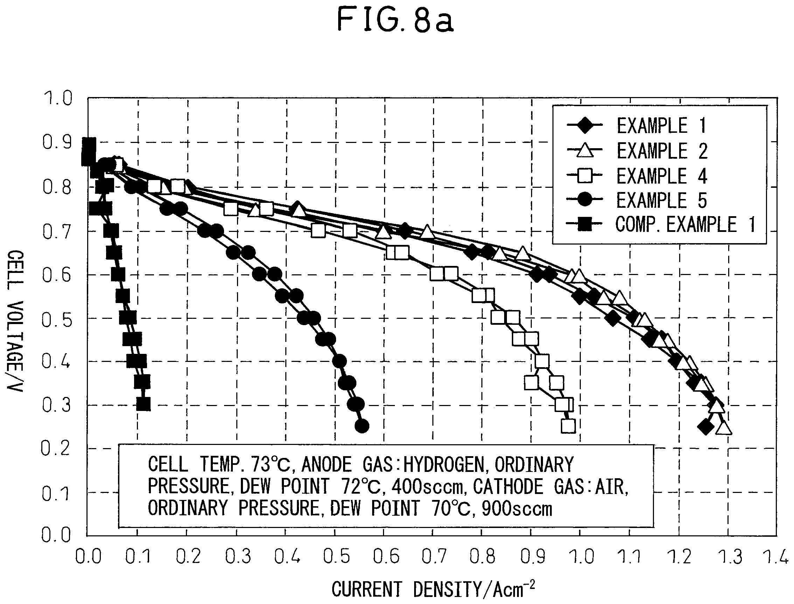

This conditioning procedure was carried out for the single polymer electrolyte fuel cells of Examples 1 to 5 and Comparative Examples 1 to 4. The results of a subsequent initial characteristic evaluation and high voltage sustain test are shown in Table 1 and Figs. 8a to 8e. Table 1 shows the measured volume percentages and weight percentages for catalyst particles in the electrode catalyst layer for Examples 1 to 5 and Comparative Examples 1 to 4, and the platinum contents (mg/cm²) in the electrode catalyst layers, as well as the relative changes in the electrochemical surface areas (with respect to the pre-test value as 100%) in the high voltage sustain test.

Fig. 8a is a graph plotting the initial I-V characteristics with different volume percentages of catalyst particles in the electrode catalyst layer. Except for Comparative Example 1 (50.6 vol%), all of the cells exhibited satisfactory power generation characteristics, with Examples 1 and 2 exhibiting particularly superior power generation characteristics. Fig. 8b is a graph plotting the initial I-V characteristics for comparison between Example 2 (one application) and Example 3 (two applications), where it is seen that Example 3 had a higher voltage in the low current density region (see magnified inset), thus indicating that increasing the catalyst particle content (platinum content) per unit area can yield high output in the low current density region. In Comparative Example 2, the volume percentage of catalyst particles was too high resulting in insufficient ionic conductive polymer in the electrode catalyst layer, and therefore the electrode catalyst layer slipped off and failed to form.

Figs. 8c, 8d and 8e are graphs plotting the changes in I-V characteristics for Examples 1, Comparative Example 3 and Comparative Example 4 in the high voltage sustain test. As clearly seen in Fig. 8c, the single cell of Example 1 showed virtually no change in the current density (A/cm²)-voltage (V) curve even when the high voltage sustain test was conducted for a total of 90 minutes, i.e., the equivalent of 3 times. As seen in Table 1, there was also virtually no change in the electrochemical surface area for Example 1. On the other hand, Comparative Examples 3 and 4 (Figs. 8d and 8e) exhibited observable performance deterioration in the current density (A/cm²)-voltage (V) curve, and Table 1 also shows a notable decline in the electrochemical surface area.

**Table 1 Catalyst particle concentrations of cathode catalyst layers, platinum contents of electrode catalyst layers and relative changes in electrochemical surface areas**

| | Catalyst particle concentration (vol%) | Catalyst particle concentration (wt%) | Platinum content (mg/cm²)¹⁾ | Relative change in electrochemical surface area²⁾ in 1.5 V sustain test (%, with pre-test value as 100%) | | |
|---|---|---|---|---|---|---|
| | | | | 30 min | 60 min | 90 min |
| Example 1 | 62.4 | 91.3 | 0.79 | 94 | 93 | 97 |
| Example 2 | 72.4 | 94.3 | 0.65 | - | - | 101³⁾ |
| Example 3 | 72.4 | 94.3 | 0.91 | - | - | 96³⁾ |
| Example 4 | 81.8 | 96.6 | 0.81 | - | - | 98³⁾ |
| Example 5 | 59.6 | 90.3 | 0.75 | - | - | 97³⁾ |
| Comparative Example 1 | 50.6 | 86.6 | 0.75 | - | - | - |
| Comparative Example 2 | 94.4 | 99.0 | - | - | - | - |
| Comparative Example 3 | 95.7 | 65.9 | 0.40 | 8 | - | - |
| Comparative Example 4 | - | 69.3 | 0.55 | 44 | 28 | - |

| | | | | | | |
|---|---|---|---|---|---|---|
| 1) The platinum content could not be measured in Comparative Example 2 due to slipping of the electrode catalyst layer. 2) Measuring error for electrochemical surface area: ±3.1% 3) Measurements at 30 minutes and 60 minutes were omitted for Examples 2-5, and therefore only the data for 90 minutes are shown. | | | | | | |

A polymer electrolyte fuel cell comprising an electrode catalyst layer formed using an ink composition and a second electrode catalyst layer composed of second catalyst particles embedded in the PEM surface was fabricated in the following manner and evaluated.

A 1 g portion of a Pt-perylene catalyst was placed in a reagent bottle together with 0.95 g of an ionic conductive polymer (trade name: Nafion DE1021 - 10% aqueous solution, product of DuPont) and 5.38 g of purified water, and then 10 g of zirconia beads (0.8 mm diameter) were added and the reagent bottle was sealed and shaken for 1 hour with a paint shaker to prepare a catalyst-dispersed cathode ink composition 2.

### Example 6

### - Fabrication of second electrode catalyst layer

A Pt-perylene catalyst particle-supporting polyimide sheet was die-cut to 5 cm × 5 cm square and the Pt-perylene catalyst particle-supporting polyimide sheet was laminated with a PEM formed on a polyimide substrate, with the catalyst side contacting the PEM. A polyimide substrate was further laminated thereover, and a roll laminator heated to 160°C was used to transfer the catalyst particles directly onto the PEM to form a second electrode catalyst layer.

### - Fabrication of first electrode catalyst layer

The cathode ink composition 2 was spray coated onto the PEM on which the second electrode catalyst layer had been formed, to form a first electrode catalyst layer, thus fabricating a laminated cathode catalyst layer.

### Example 7

The cathode ink composition 2 was knife coated onto a PEM formed on a substrate, to fabricate a cathode catalyst layer.

### Comparative Example 5

A Pt-perylene catalyst particle-supporting polyimide sheet was die-cut to 5 cm × 5 cm square and the Pt-perylene catalyst particle-supporting polyimide sheet was laminated with a PEM formed on a polyimide substrate, with the catalyst side contacting the PEM. A polyimide substrate was further laminated thereover, and a roll laminator heated to 160°C was used to transfer the catalyst particles directly onto the PEM to form a cathode catalyst layer.

The PEM, GDL and anode catalyst layer were fabricated in the same manner as Example 1.

A GDL (5 cm × 5 cm) was laminated on the cathode catalyst layer side of the PEM on which the cathode catalyst layer had been formed, and the PEM was laminated with a second GDL on the other side of the PEM, in such a manner that the anode catalyst layer formed on the second GDL contacted the PEM. Next, the laminated body was thermocompression bonded for 7 minutes using a hot press at 138°C, 1800 kPa, to fabricate a MEA.

A single polymer electrolyte fuel cell was fabricated in the same manner as Example 1. Conditioning of the polymer electrolyte fuel cell was also carried out in the same manner as Example 1.

### Measurement of electrochemical surface area

A potentiostat was connected to the single cell and, while supplying hydrogen (dew point: 80°C) to the anode and nitrogen (dew point: 80°C) to the cathode each at a flow rate of 500 sccm, with a cell temperature of 80°C, the CV was measured and the electrochemical surface area of the cathode catalyst was calculated.

### Output performance test - Current scan operation

The temperature of the single cell was adjusted to 80°C, and then hydrogen (dew point: 80°C) was supplied to the anode at a flow rate of 209 sccm while oxygen (dew point: 80°C) was supplied to the cathode at a flow rate of 664 sccm, for constant current operation at 0.8 A/cm² for 40 minutes. After sustaining open voltage for 1 minute, current scan operation was conducted to 0.004-0.8 A/cm². The retention times at each current density were 3 minutes at 0.004, 0.008, 0.016, 0.04, 0.1 and 0.2 A/cm², and 5 minutes at 0.3, 0.4, 0.5, 0.6, 0.7 and 0.8 A/cm².

### Comparison of catalyst specific activities

The output data obtained by current scan operation were processed for IR correction and short crossover correction, and the cell voltages at 0.004, 0.008, 0.016 and 0.04 A/cm² were Tafel plotted. The current density at a cell voltage of 0.9 V was calculated with an approximate straight line formula, and the value thus obtained was divided by the electrochemical surface area, to determine the catalyst specific activity.

### Output performance test - Constant current operation

The temperature of the single cell was adjusted to 80°C, and then hydrogen (dew point: 80°C) was supplied to the anode at a flow rate of 800 sccm and air (dew point: 80°C) was supplied to the cathode at a flow rate of 2000 sccm during constant current operation at 0.1 A/cm², changing the current to 0.2 A/cm² and holding it for 5 minutes when the cell resistance stabilized. The average value of the cell voltage at this time was recorded as the output performance during full humidification.

The dew points of the hydrogen supplied to the anode and the air supplied to the cathode were changed to 68°C, 64°C and 59°C, and the cell voltage was measured in the same manner under the different conditions to determine the output performance for each dew point.

The evaluation results are shown in Table 2.

**Table 2**

| | Current density @0.9V (mA/cm²) | Electrochemical surface area (cm²/cm²) | Catalyst specific activity (mA/cm²-Pt) | Platinum content (mg/cm²) |
|---|---|---|---|---|
| Example 6 | 16.6 | 38.5 | 0.43 | 0.62 |
| Example 7 | 13.1 | 36.2 | 0.36 | 0.58 |
| Comp. Example 5 | 9.5 | 8.35 | 1.13 | 0.20 |

In Examples 6 and 7, it was possible to achieve high current density without significantly increasing the amount of platinum. Particularly in Example 6, combination with the second electrode catalyst layer allowed further increase in the catalyst specific activity with approximately the same platinum content, compared to Example 7, thus resulting in a higher current density. In Comparative Example 5, however, it was difficult to further increase the current density even though the catalyst specific activity was highest.

### Humidity dependence of electric power generation performance

Fig. 9 shows cell voltages with constant current operation at 0.2 A/cm², with varying relative humidity (dew points of supplied hydrogen and air). With decreasing relative humidity, the cell voltage decreased drastically in Comparative Example 5, but relatively high cell voltage was still maintained in Examples 6 and 7.

A polymer electrolyte fuel cell comprising a first electrode catalyst layer composed of first catalyst particles and a second electrode catalyst layer composed of second catalyst particles embedded in the PEM, with the electrode catalyst layers consolidated in a laminated state, was fabricated in the following manner and evaluated.

A 2 g portion of a platinum-perylene catalyst was placed in a reagent bottle together with 8 g of purified water, and then 10 g of zirconia beads (0.8 mm diameter) were added and the reagent bottle was sealed and shaken for 3 hours with a paint shaker to prepare a catalyst-dispersed cathode catalyst dispersion.

A 1 g portion of a platinum-perylene catalyst was placed in a reagent bottle together with 0.95 g of an ionic conductive polymer (trade name: Nafion DE1021 - 10% aqueous solution, product of DuPont) and 5.38 g of purified water, and then 3 g of zirconia beads (0.8 mm diameter) were added and the reagent bottle was sealed and shaken for 1 hour with a paint shaker to prepare a catalyst-dispersed cathode ink composition 3.

After placing 3 g of acetylene black (trade name: DENKA BLACK, 50% press, product of Denki Kagaku Kogyo Co., Ltd.) in a reagent bottle together with 30 g of an ionic conductive polymer (trade name: Nafion DE1021 - 10% aqueous solution, product of DuPont) and 34 g of purified water, a homogenizer (trade name: PHYSCOTRON NS-51, product of Microtec Nition Co., Ltd.) was used for stirring at 15,000 rpm for 10 minutes, and then a jet mill (trade name: STARBURST MINI HJP-25001S) was used for 10 passes to produce a moisture retention layer ink.

### Example 8

### - Fabrication of second electrode catalyst layer

A Pt-perylene catalyst particle-supporting polyimide sheet was die-cut to 5 cm × 5 cm square and the Pt-perylene catalyst particle-supporting polyimide sheet was laminated with a PEM formed on a polyimide substrate, with the catalyst side contacting the PEM. A polyimide substrate was further laminated thereover, and a roll laminator heated to 160°C was used to transfer the catalyst particles directly onto the PEM to form a second electrode catalyst layer.

### - Fabrication of first electrode catalyst layer

The cathode catalyst dispersion was spray coated onto a second electrode catalyst layer-formed PEM to form a first electrode catalyst layer. The amounts of dispersion applied were varied to fabricate two samples with different platinum contents (Examples 8-1 and 8-2).

### - Consolidation treatment

A roll laminator heated to 160°C was used for consolidation treatment of the first and second electrode catalyst layer together at 793 kPa, to produce a laminated cathode catalyst layer.

### Example 9

The moisture retention layer ink was spray coated onto the first electrode catalyst layer of the laminated electrode catalyst layer of Example 8 to form a moisture retention layer, thus fabricating a moisture retention layer-attached laminated electrode catalyst layer. The platinum content was approximately the same as Example 8-2.

### Comparative Example 6

The cathode catalyst dispersion was spray coated onto a PEM formed on a substrate to fabricate an electrode catalyst layer composed entirely of the first electrode catalyst layer (without consolidation treatment).

### Comparative Example 7

The cathode catalyst dispersion was spray coated onto a PEM formed on a substrate, and then a roll laminator heated to 160°C was used for consolidation treatment at 793 kPa, to fabricate an electrode catalyst layer composed entirely of the first electrode catalyst layer (with consolidation treatment).

### Comparative Example 8

The method of forming the first and second electrode catalyst layers in Example 8 was carried out in the same manner to produce a laminated electrode catalyst layer, but without consolidation treatment.

The PEM, GDL, anode catalyst layer, MEA and single polymer electrolyte fuel cells were fabricated in the same manner as Example 6. Conditioning of the polymer electrolyte fuel cell was also carried out in the same manner as Example 1.

Measurement of the electrochemical surface area of the cathode catalyst, output performance testing-current scan operation and calculation of the catalyst specific activity were carried out by the same methods as in Example 6.

The evaluation results are shown in Table 3, together with the structure of the electrode catalyst layer.

**Table 3 Cathode catalyst layer structure and catalyst specific activity**

| | Second electrode catalyst layer | First electrode catalyst layer | Consolidation treatment | Moisture retention layer | Electrochemical surface area (cm²/cm²) | Current density @0.9V (mA/cm²) | Catalyst specific activity (mA/cm²-Pt) | Platinum content (mg/cm²) |
|---|---|---|---|---|---|---|---|---|
| Example 8-1 | + | + | + | - | 29.0 | 21.2 | 0.73 | 0.79 |
| Example 8-2 | + | + | + | - | 21.3 | 15.4 | 0.72 | 0.58 |
| Example 9 | + | + | + | + | 21.7 | 15.1 | 0.70 | 0.59 |
| Comp. Example 5 | + | - | - | - | 7.4 | 7.0 | 0.95 | 0.20 |
| Comp. Example 6 | - | + | - | - | 21.0 | 9.9 | 0.47 | 0.57 |
| Comp. Example 7 | - | + | + | - | 47.1 | 21.0 | 0.45 | 1.28 |
| Comp. Example 8 | + | + | - | - | 46.3 | 22.4 | 0.48 | 1.26 |

In Examples 8-1, 8-2 and 9, it was possible to obtain high current density while maintaining high catalyst specific activity. In Comparative Example 5, it was difficult to further increase the current density even though the catalyst specific activity was high. In the other comparative examples, the low catalyst specific activity necessitated an increased platinum content for high current density.

### Relative humidity dependence of electric power generation performance

Figs. 10a and 10b show the current density-cell voltage characteristics for Examples 8-2 and 9, where the dew point on the cathode side was varied to 80°C, 70°C and 60°C and the same current scan operation was conducted as for full humidification. The label "80/80/80" in the drawing means, from left, cell temperature (°C)/anode side dew point (°C) /cathode side dew point (°C). It was demonstrated that providing a moisture retention layer minimized the reduction in cell voltage under low humidification conditions (especially with a current density in the range of 0-0.10 A/cm²).

### INDUSTRIAL APPLICABILITY

According to the disclosure, it is possible to fabricate an electrode catalyst layer, a membrane electrode assembly and a polymer electrolyte fuel cell stack that exhibit excellent durability and desirable output characteristics.

## Claims

1. An electrode catalyst dispersion comprising:
a) catalyst particles comprising
i) a non-conductive support in the form of whiskers comprising one or more materials selected from the group consisting of naphthalenes, phenanthrenes, perylenes, anthracene, coronenes, pyrenes, phthalocyanines, porphyrins, carbazoles, purines and pterins, and
ii) a conductive catalyst material covering the surface of non-conductive support whiskers;
b) a dispersing medium selected from the group consisting of water, organic solvents and combinations thereof; and
c) an ionic conductive polymer;
wherein the catalyst particles and the ionic conductive polymer are dispersed in the dispersing medium, and
wherein the volume percentage of the catalyst particles, based on the total volume of the catalyst particles and ionic conductive polymer, is in the range of 55 vol% to 90 vol%;
wherein the term "whiskers" refers to an acicular form, but does not necessarily mean a linear shape.

2. The electrode catalyst dispersion of claim 1, wherein the dispersing medium is an organic solvent selected from C1-6 alcohols, C1-6 ethers, C1-6 alkanes, dialkylformamides, dialkyl sulfoxides and combinations thereof.

3. The electrode catalyst dispersion of claim 1, wherein the ionic conductive polymer is a fluorocarbon-based ion exchange resin selected from tetrafluoroethylene-perfluorosulfonylethoxyvinyl ether hydrate and tetrafluoroethylene-hydroxylated (perfluorovinyl ether) copolymer.

4. An ink composition comprising the electrode catalyst dispersion according to any one of claims 1 to 3.

5. An ink composition according to claim 4, wherein the non-conductive support is in the form of whiskers having a mean aspect ratio of 3 or greater.

6. An ink composition according to claim 5, wherein the mean diameter of the whisker cross-section of the whiskers of the non-conductive support is no greater than 100 nm.

7. An ink composition according to claim 4, wherein the conductive catalyst material contains at least one metal selected from the group consisting of Au, Ag, Pt, Os, Ir, Pd, Ru, Rh, Sc, V, Cr, Mn, Fe, Co, Ni, Cu, Zr, Bi, Pd, In, Sb, Sn, Zn, Al, W, Re, Ta and Mo, or an alloy thereof.

8. An ink composition according to claim 4, wherein the weight percent of the dispersing medium is 50 wt% to 99 wt% with respect to the total weight of the ink composition.

9. A process for production of an ink composition according to claim 4, which comprises
(i) a step of forming, on a substrate, catalyst particles containing a non-conductive support and a conductive catalyst material covering the surface of the non-conductive support,
(ii) a step of releasing the catalyst particles from the substrate, and
(iii) a step of dispersing the released catalyst particles into a solution containing an ionic conductive polymer.

10. A process according to claim 9, wherein the catalyst particle forming step (i) includes
a step of forming a non-conductive support in the form of whiskers on the substrate, and
a step of covering the surface of the non-conductive support whiskers formed on the substrate with a conductive catalyst material by a physical vapor phase deposition method or chemical vapor phase deposition method,
wherein the term "whiskers" refers to an acicular form, but does not necessarily mean a linear shape.

11. A process according to claim 10, wherein the mean aspect ratio of the non-conductive support whiskers is at least 3.

12. A process according to claim 9, wherein the releasing step (ii) includes
thermocompression of a polymer membrane on the substrate on which the catalyst particles have been formed to transfer the catalyst particles to the polymer membrane, and then immersing the catalyst particle-transferred polymer membrane in a liquid which swells but does not dissolve the polymer membrane to free the catalyst particles into the liquid.

13. A process according to claim 9, wherein the releasing step (ii) includes
causing the catalyst particles formed on the substrate to penetrate a thin film of a second material in a liquid state formed on the surface of a first material in a solid state, solidifying the second material so that the catalyst particles become held by the solidified thin film of the second material, releasing only the substrate to transfer the catalyst particles to the solidified thin film, and then liquefying the solidified thin film to free the catalyst particles in the liquid second material.

## Patentansprüche

1. Eine Elektrodenkatalysatordispersion, umfassend:
a) Katalysatorteilchen, umfassend
i) einen nicht-leitfähigen Träger in der Form von Whiskern, umfassend ein oder mehrere Materialien, ausgewählt aus der Gruppe bestehend aus Naphthalinen, Phenanthrenen, Perylenen, Anthracen, Coronenen, Pyrenen, Phthalocyaninen, Porphyrinen, Carbazolen, Purinen und Pterinen, und
ii) ein leitfähiges Katalysatormaterial, das die Oberfläche von nicht-leitfähigen Träger-Whiskern bedeckt;
b) ein Dispersionsmedium, ausgewählt aus der Gruppe bestehend aus Wasser, organischen Lösungsmitteln und Kombinationen davon; und
c) ein ionisches leitfähiges Polymer;
wobei die Katalysatorteilchen und das ionische leitfähige Polymer in dem Dispersionsmedium dispergiert sind, und
wobei der Volumenprozentsatz der Katalysatorteilchen, bezogen auf das Gesamtvolumen der Katalysatorteilchen und des ionischen leitfähigen Polymers, im Bereich von 55 Vol.-% bis 90 Vol.-% liegt;
wobei sich der Ausdruck "Whisker" auf eine nadelförmige Form bezieht, aber nicht notwendigerweise eine lineare Form bedeutet.

2. Die Elektrodenkatalysatordispersion nach Anspruch 1, wobei das Dispersionsmedium ein organisches Lösungsmittel ist, das ausgewählt ist aus C1-6-Alkoholen, C1-6-Ethern, C1-6-Alkanen, Dialkylformamiden, Dialkylsulfoxiden und Kombinationen davon.

3. Die Elektrodenkatalysatordispersion nach Anspruch 1, wobei das ionische leitfähige Polymer ein lonenaustauschharz auf Fluorkohlenstoffbasis ist, das ausgewählt ist aus Tetrafluorethylen-Perfluorsulfonylethoxyvinyletherhydrat und Tetrafluorethylen-hydroxyliertem (Perfluorvinylether)-Copolymer.

4. Eine Tintenzusammensetzung, umfassend die Elektrodenkatalysatordispersion nach einem der Ansprüche 1 bis 3.

5. Eine Tintenzusammensetzung nach Anspruch 4, wobei der nichtleitfähige Träger in der Form von Whiskern mit einem mittleren Seitenverhältnis von 3 oder größer vorliegt.

6. Eine Tintenzusammensetzung nach Anspruch 5, wobei der mittlere Durchmesser des Whisker-Querschnitts der Whisker des nicht-leitfähigen Trägers nicht größer als 100 nm ist.

7. Eine Tintenzusammensetzung nach Anspruch 4, wobei das leitfähige Katalysatormaterial mindestens ein Metall, ausgewählt aus der Gruppe bestehend aus Au, Ag, Pt, Os, Ir, Pd, Ru, Rh, Sc, V, Cr, Mn, Fe, Co, Ni, Cu, Zr, Bi, Pd, In, Sb, Sn, Zn, Al, W, Re, Ta und Mo, oder eine Legierung davon, enthält.

8. Eine Tintenzusammensetzung nach Anspruch 4, wobei der Gewichtsprozentsatz des Dispersionsmediums, bezogen auf das Gesamtgewicht der Tintenzusammensetzung, 50 Gew.-% bis 99 Gew.-% beträgt.

9. Ein Verfahren zur Herstellung einer Tintenzusammensetzung nach Anspruch 4, welches umfasst:
(i) einen Schritt des Bildens von Katalysatorteilchen, die einen nicht-leitfähigen Träger und ein leitfähiges Katalysatormaterial enthalten, das die Oberfläche des nicht-leitfähigen Trägers bedeckt, auf einem Substrat,
(ii) einen Schritt des Freisetzens der Katalysatorteilchen aus dem Substrat, und
(iii) einen Schritt des Dispergierens der freigesetzten Katalysatorteilchen in eine Lösung, die ein ionisches leitfähiges Polymer enthält.

10. Ein Verfahren nach Anspruch 9, wobei der Schritt des Bildens von Katalysatorteilchen (i)
einen Schritt des Bildens eines nicht-leitfähigen Trägers in Form von Whiskern auf dem Substrat und
einen Schritt des Bedeckens der Oberfläche der auf dem Substrat gebildeten nicht-leitfähigen Träger-Whisker mit einem leitfähigen Katalysatormaterial durch ein physikalisches Dampfphasenabscheidungsverfahren oder chemisches Dampfphasenabscheidungsverfahren einschließt,
wobei sich der Ausdruck "Whisker" auf eine nadelförmige Form bezieht, aber nicht notwendigerweise eine lineare Form bedeutet.

11. Ein Verfahren nach Anspruch 10, wobei das mittlere Seitenverhältnis der nicht-leitfähigen Träger-Whisker mindestens 3 beträgt.

12. Ein Verfahren nach Anspruch 9, wobei der Schritt des Freisetzens (ii) Thermokompression einer Polymermembran auf das Substrat, auf dem die Katalysatorteilchen gebildet wurden, um die Katalysatorteilchen auf die Polymermembran zu übertragen, und
dann Eintauchen der Polymermembran mit den übertragenen Katalysatorteilchen in eine Flüssigkeit, die die Polymermembran quellen lässt, aber sie nicht auflöst, um die Katalysatorteilchen in die Flüssigkeit freizusetzen, einschließt.

13. Ein Verfahren nach Anspruch 9, wobei der Schritt des Freisetzens (ii) Veranlassen der auf dem Substrat gebildeten Katalysatorteilchen, um in einen dünnen Film aus einem zweiten Material in einem flüssigen Zustand, der auf der Oberfläche eines ersten Materials in einem festen Zustand gebildet ist, einzudringen, Verfestigen des zweiten Materials, so dass die Katalysatorteilchen durch den verfestigten dünnen Film aus dem zweiten Material gehalten werden,
Abtrennen von nur dem Substrat, um die Katalysatorteilchen auf den verfestigten dünnen Film zu übertragen, und
dann Verflüssigen des verfestigten dünnen Films, um die Katalysatorteilchen in dem flüssigen zweiten Material freizusetzen, einschließt.

## Revendications

1. Dispersion de catalyseur d'électrode comprenant :
a) des particules de catalyseur comprenant
i) un support non conducteur sous la forme de trichites comprenant un ou plusieurs matériaux choisis dans le groupe constitué de naphtalènes, phénanthrènes, pérylènes, anthracène, coronènes, pyrènes, phtalocyanines, porphyrines, carbazoles, purines et ptérines, et
ii) un matériau catalyseur conducteur recouvrant la surface de trichites de support non conductrices ;
b) un milieu de dispersion choisi dans le groupe constitué par l'eau, les solvants organiques et leurs combinaisons ; et
c) un polymère conducteur ionique ;
dans laquelle les particules de catalyseur et le polymère conducteur ionique sont dispersés dans le milieu de dispersion, et
dans laquelle le pourcentage en volume des particules de catalyseur, sur la base du volume total des particules de catalyseur et du polymère conducteur ionique, est dans la plage de 55 % en volume à 90 % en volume ;
dans laquelle le terme « trichites » se réfère à une forme aciculaire, mais n'entend pas nécessairement une forme linéaire.

2. Dispersion de catalyseur d'électrode selon la revendication 1, dans laquelle le milieu de dispersion est un solvant organique choisi parmi les alcools de C1-6, les éthers de C1-6, les alcanes de C1-6, les dialkylformamides, les dialkylsulfoxydes et leurs combinaisons.

3. Dispersion de catalyseur d'électrode selon la revendication 1, dans laquelle le polymère conducteur ionique est une résine échangeuse d'ions à base de fluorocarbone choisie parmi le copolymère d'hydrate d'éther tétrafluoroéthylène-perfluorosulfonyléthoxyvinyle et tétrafluoroéthylène hydroxylé (perfluorovinyléther).

4. Composition d'encre comprenant la dispersion de catalyseur d'électrode selon l'une quelconque des revendications 1 à 3.

5. Composition d'encre selon la revendication 4, dans laquelle le support non conducteur est sous la forme de trichites ayant un rapport d'aspect moyen de 3 ou plus.

6. Composition d'encre selon la revendication 5, dans laquelle le diamètre moyen de la section transversale des trichites du support non conducteur n'est pas supérieur à 100 nm.

7. Composition d'encre selon la revendication 4, dans laquelle le matériau catalyseur conducteur contient au moins un métal choisi dans le groupe constitué par Au, Ag, Pt, Os, Ir, Pd, Ru, Rh, Sc, V, Cr, Mn, Fe, Co, Ni, Cu, Zr, Bi, Pd, In, Sb, Sn, Zn, Al, W, Re, Ta et Mo ou un alliage de ceux-ci.

8. Composition d'encre selon la revendication 4, dans laquelle le pourcentage en poids du milieu de dispersion est de 50 % en poids à 99 % en poids par rapport au poids total de la composition d'encre.

9. Procédé de production d'une composition d'encre selon la revendication 4, qui comprend
(i) une étape de formation, sur un substrat, de particules de catalyseur contenant un support non conducteur et un matériau catalyseur conducteur recouvrant la surface du support non conducteur,
(ii) une étape de libération des particules de catalyseur du substrat, et
(iii) une étape de dispersion des particules de catalyseur libérées dans une solution contenant un polymère conducteur ionique.

10. Procédé selon la revendication 9, dans lequel l'étape de formation de particules de catalyseur (i) comprend
une étape de formation d'un support non conducteur sous la forme de trichites sur le substrat, et
une étape de recouvrement de la surface des trichites de support non conductrices formées sur le substrat avec un matériau catalyseur conducteur par un procédé de dépôt physique en phase vapeur ou un procédé de dépôt chimique en phase vapeur,
dans lequel le terme « trichites » désigne une forme aciculaire, mais n'entend pas nécessairement une forme linéaire.

11. Procédé selon la revendication 10, dans lequel le rapport d'aspect moyen des trichites de support non conductrices est d'au moins 3.

12. Procédé selon la revendication 9, dans lequel l'étape de libération (ii) comprend
la thermocompression d'une membrane polymère sur le substrat sur lequel les particules de catalyseur ont été formées pour transférer les particules de catalyseur dans la membrane polymère, puis immersion de la membrane polymère sur laquelle ont été transférées les particules de catalyseur dans un liquide qui gonfle mais ne dissout pas la membrane polymère pour libérer les particules de catalyseur dans le liquide.

13. Procédé selon la revendication 9, dans lequel l'étape de libération (ii) comprend
le fait de provoquer la pénétration par les particules de catalyseur formées sur le substrat d'un film mince d'un second matériau à l'état liquide formé sur la surface d'un premier matériau à l'état solide, la solidification du second matériau de sorte que les particules de catalyseur deviennent maintenues par le film mince solidifié du second matériau, la libération unique du substrat pour transférer les particules de catalyseur au film mince solidifié, puis la liquéfaction du film mince solidifié pour libérer les particules de catalyseur dans le second matériau liquide.
